# EUROPÄISCHE PATENTANMELDUNG

(11) **EP 4 725 684 A2**
(43) Veröffentlichungstag der Anmeldung: **15.04.2026**
(21) Anmeldenummer: 26159548.2
(22) Anmeldetag: 11.03.2024
(51) Int. Cl.: B29C 70/54

(54) **FASERVERSTÄRKTES BAUTEIL, VERFAHREN UND VORRICHTUNG ZUR HERSTELLUNG EINES SOLCHEN BAUTEILS SOWIE VERFAHREN ZUM RECYCLEN EINES SOLCHEN BAUTEILS**

(62) Teilanmeldung aus: 24715441.2
(71) Anmelder: Holy Technologies GmbH, 22547 Hamburg (DE)
(72) Erfinder: Reiners, Moritz Jonathan, 22765 Hamburg (DE); Rothe Frossard, Bosse, 80798 München (DE)
(74) Vertreter: Reiser & Partner Patentanwälte mbB

(57) **Zusammenfassung**

Die Erfindung betrifft ein faserverstärktes Bauteil (1, 60), umfassend einen Körper (2) mit einer Matrix (3), die einen polymeren Werkstoff umfasst, und einem flächenförmigen Gebilde (4), das durch ein Faserbündel (5) gebildet ist, wobei das flächenförmige Gebilde (4) in der Matrix (3) eingebettet ist. Die Erfindung ist dadurch gekennzeichnet, dass das Faserbündel (5) in dem flächenförmigen Gebilde (4) mehrere regelmäßige Schleifen (6, 40, 41, 42) bildet, die durch Abschnitte des Faserbündels (5) gebildet sind, wobei das Faserbündel (5) in jeder Schleife (6, 40, 41, 42) zumindest einen ersten und einen zweiten Richtungswechselpunkt (7, 8) aufweist, wobei das Faserbündel (5) gekrümmte Abschnitte aufweist, die an den ersten und zweiten Richtungswechselpunkten (7, 8) der Schleifen (6, 40, 41, 42) angeordnet sind, wobei das Faserbündel (5) zwischen den ersten und zweiten Richtungswechselpunkten (7, 8) der Schleife (6, 40, 41, 42) jeweils einen ersten und einen zweiten Verbindungsabschnitt (9, 10) aufweist. Die Erfindung betrifft darüber hinaus ein Verfahren und eine Vorrichtung zur Herstellung des faserverstärkten Bauteils. Zudem betrifft die Erfindung ein Verfahren zum Recyclen eines faserverstärkten Bauteils.

## Beschreibung

Faserverstärktes Bauteil, Verfahren und Vorrichtung zur Herstellung eines solchen Bauteils sowie Verfahren zum Recyclen eines solchen Bauteils

Die Erfindung betrifft ein faserverstärktes Bauteil, umfassend einen Körper mit einer Matrix, die einen polymeren Werkstoff umfasst, und einem flächenförmigen Gebilde, das durch ein Faserbündel gebildet ist, wobei das flächenförmige Gebilde in der Matrix eingebettet ist. Die Erfindung betrifft darüber hinaus ein Verfahren und eine Vorrichtung zur Herstellung des faserverstärkten Bauteils. Zudem betrifft die Erfindung ein Verfahren zum Recyclen eines faserverstärkten Bauteils.

Faserverstärkte Bauteile sind in unterschiedlichen Ausführungsformen bekannt. Bei diesen sind Fasern, wie beispielsweise Carbonfasern, Glasfasern, Polymerfaser und/oder Naturfasern, in eine Matrix eingebettet. Faserverstärkte Bauteile sind stabil und können bei geringem Bauteilgewicht vergleichsweise hohe Kräfte aufnehmen.

Faserverstärkte Bauteile sind jedoch noch nicht in der gewünschten Weise recyclebar. Zwar ist es bereits bekannt, das Material der Matrix aufzulösen und dem Recycling zuzuführen. Die zur Verstärkung vorgesehen Fasern des Bauteils liegen regelmäßig in Form eines Gewebes, eines Geleges oder eines Tapes vor, das relativ kurze Faserabschnitte enthält und nicht oder nur in beschränkter Weise wiederverwertet werden kann.

Unabhängig davon besteht ein Bedarf, faserverstärkte Bauteile herzustellen, welche die im Betrieb auftretenden Kräfte besonders effektiv aufnehmen können.

Der Erfindung liegt die Aufgabe zugrunde, ein faserverstärktes Bauteil anzugeben, das eine hohe Stabilität bei geringem Materialeinsatz aufweist und eine gute Recyclingfähigkeit besitzt.

Diese Aufgabe wird mit den Merkmalen von Anspruch 1 gelöst. Demnach ist ein faserverstärktes Bauteil vorgesehen, umfassend einen Körper mit einer Matrix, die ein Polymer umfasst, und einem flächenförmigen Gebilde, das durch ein Faserbündel gebildet ist, wobei das flächenförmige Gebilde in der Matrix eingebettet ist, wobei das Faserbündel in dem flächenförmigen Gebilde mehrere regelmäßige Schleifen bildet, die durch Abschnitte des Faserbündels gebildet sind, wobei das Faserbündel in jeder Schleife zumindest einen ersten und einen zweiten Richtungswechselpunkt aufweist, wobei das Faserbündel gekrümmte Abschnitte aufweist, die an den ersten und zweiten Richtungswechselpunkten der Schleife angeordnet sind, wobei das Faserbündel zwischen den ersten und zweiten Richtungswechselpunkten der Schleife jeweils einen ersten und einen zweiten Verbindungsabschnitt aufweist.

Mit dieser Gestaltung kann bei geringem Materialeinsatz eine hohe Stabilität des faserverstärkten Bauteils erreicht werden. Aufgrund der Gestaltung mit dem flächenförmigen Gebilde aus einem Faserbündel mit mehreren regelmäßigen Schleifen können Kräfte von dem Bauteil besonders effektiv aufgenommen werden. Damit lassen sich Bauteile mit hoher Steifigkeit und Festigkeit bei geringem Bauteilgewicht realisieren. Insbesondere können die Schleifen so in dem Bauteil angeordnet sein, dass dieses an die konkrete Belastung bei der vorgesehenen Verwendung angepasst ist. Hierbei besteht die Möglichkeit, dass Abschnitte des in Schleifen angeordneten Faserbündels in Hauptbelastungsrichtungen angeordnet werden, um auftretende Kräfte, insbesondere auftretende Zugkräfte, effektiv aufzunehmen. Auf diese Weise können auch auftretende Biegekräfte in dem Bauteil aufgenommen werden, insbesondere wenn diese zu einer Zugbelastung des Faserbündels führen. Aufgrund der erfindungsgemäßen Gestaltung wird zudem die Recyclingfähigkeit verbessert. Da das Faserbündel in dem flächenförmigen Gebilde in Schleifen angeordnet ist, kann dieses nach Auflösung oder anderweitiger Entfernung der Matrix leichter wieder zurückgewonnen werden. Hierfür ist zum einen maßgeblich, dass aufgrund der Anordnung in Schleifen das Faserbündel in dem flächenförmigen Gebilde in langen Abschnitten, ggf. sogar in nur einem einzigen Abschnitt, vorliegt. Somit kann beim Recycling das Faserbündel über eine große Länge zurückgewonnen werden. Damit kann nach dem Recycling ein recyceltes Faserbündel erhalten werden, das erneut für vergleichbare Produkte, die strukturell belastet werden können, eingesetzt werden kann. Das ist ein wesentlicher Vorteil gegenüber vorbekannten Lösungen. Beispielsweise ist bei der Verwendung von Fasergeweben das Faserbündel typischerweise in kurze Abschnitte geschnitten, die nicht größer als die maximale Bauteildimension sind. Bei solchen Produkten kann das Faserbündel beim Recycling typischerweise nur in kurzen Abschnitten zurückgewonnen werden, die die maximale Bauteillänge nicht überschreiten. Ein weiterer Vorteil des faserverstärkten Bauteils ist die Ersparnis an Gewicht und Material, die damit erzielt werden kann. Damit trägt es zur Schonung der Ressourcen bei und hilft Betriebskosten zu reduzieren. Zudem kann das faserverstärkte Bauteil mit unterschiedlichen Materialien für die Fasern wie auch für die Matrix realisiert werden. Das erlaubt eine Anpassung an die jeweiligen Gegebenheiten und Erfordernisse. Schließlich trägt das faserverstärkte Bauteil zu reduzierten Herstellungskosten bei, da es ermöglicht, das Bauteil spezifisch an die jeweiligen Anforderungen und Belastungen anzupassen. Zudem kann das Bauteil effizient automatisch gefertigt werden. Insbesondere ist es möglich, exakte Bauteile herzustellen, deren Oberflächen nicht oder in reduziertem Umfang nachbearbeitet werden müssen. Von daher kann der Aufwand für eine Nachbearbeitung reduziert werden. Zudem können Beschädigungen des Faserbündels, die z. B. durch eine mechanische Bearbeitung entstehen, die dessen Wiederverwertbarkeit einschränken würden, vermieden werden.

Nachfolgend werden bevorzugte Ausführungsformen beschrieben, die die vorgenannten Vorteile und Wirkungen weiter fördern.

Eine vorteilhafte Ausgestaltung der Erfindung sieht vor, dass die regelmäßigen Schleifen des flächenförmigen Gebildes versetzt zueinander angeordnet sind. Das trägt zu einer hohen Stabilität bei. Vorzugsweise sind die Schleifen um einen Abstand A zueinander versetzt angeordnet. Vorzugsweise ist der Abstand A für mehrere (bevorzugt mehr als 3, besonders bevorzugt mehr als 5, besonders bevorzugt mehr als 10) versetzt zueinander angeordnete Schleifen identisch. Vorzugsweise ist der Abstand A größer als der Durchmessers des Faserbündels. Es ist bevorzugt, wenn der Abstand A größer als 1 mm ist.

Eine bevorzugte Ausgestaltung sieht vor, dass die Schleifen in der Richtung, in der die Schleifen versetzt zueinander angeordnet sind, eine Schleifenbreite B aufweisen. Vorzugsweise ist der Abstand A kleiner als die Schleifenbreite B. Insbesondere kann der Abstand A zwischen dem 0,2-fachen und dem 0,9-fachen der Schleifenbreite B betragen.

Eine stabile und besonders einfache Gestaltung wird dann erreicht, wenn die regelmäßigen Schleifen in dem flächenförmigen Gebilde versetzt nebeneinander angeordnet sind. Das trägt auch zu einem einfachen Recycling bei, da das Faserbündel nach dem Entfernen der Matrix besonders einfach aufgenommen werden kann.

Eine weitere bevorzugte Ausführung sieht vor, dass die regelmäßigen Schleifen überlappend angeordnet sind. Im Überlappungsbereich ist ein Abschnitt des Faserbündels einer der Schleifen über einem weiteren Abschnitt des Faserbündels einer benachbarten Schleife angeordnet. Das trägt zu einer höheren Stabilität bei, ohne die Recyclingfähigkeit zu verschlechtern. Insbesondere können damit Bauteile erhalten werden, die bei kleinen Bauteilabmessungen in unterschiedlichen Richtungen hohe Lasten aufnehmen können.

Die Vorteile der Erfindung werden dadurch weiter gefördert, dass mehrere der regelmäßigen Schleifen dieselbe Grundform aufweisen. Vorzugsweise weisen mehr als 25 % (bevorzugt mehr als 50 %) der Schleifen dieselbe Grundform auf.

Eine vorteilhafte Ausgestaltung sieht vor, dass ein erster Faserbündelabschnitt eine erste der regelmäßigen Schleifen, ein daran anschließender zweiter Faserbündelabschnitt eine zweite der regelmäßigen Schleifen bildet. Vorzugsweise bildet ein dritter an den zweiten Faserabschnitt anschließender Faserbündelabschnitt eine dritte der Schleifen. Vorzugsweise bildet ein vierter an den dritten Faserbündelabschnitt anschließender Faserbündelabschnitt eine vierte der Schleifen. In gleicher Weise können weitere Faserbündelabschnitte vorgesehen sein, die weitere der Schleifen bilden.

Eine bevorzugte Ausgestaltung sieht vor, dass das flächenförmige Gebilde wenigstens drei (vorzugsweise: wenigstens 10; wenigstens 50; wenigstens 100; wenigstens 500; wenigstens 5000) versetzt zueinander angeordnete regelmäßige Schleifen aufweist, die durch Abschnitte des Faserbündels gebildet sind. Vorzugsweise werden die Schleifen durch aufeinanderfolgende Abschnitte des Faserbündels gebildet.

Erfindungsgemäß kann in vorteilhafter Weise vorgesehen sein, dass an den ersten und zweiten Richtungswechselpunkten ein Richtungswechsel des Faserbündels um mehr als 45 ° vorliegt. Vorzugsweise liegt ein Richtungswechsel um mehr als 60 ° vor. Weiterhin ist bevorzugt, wenn der Richtungswechsel weniger als 270 °, besonders bevorzugt weniger als 225 ° beträgt.

Eine erste bevorzugte Ausführung sieht einen Richtungswechsel an den ersten und zweiten Richtungswechselpunkten in dem Bereich zwischen 135 ° bis 225 ° vor. Das ist insbesondere für die Ausführungen vorteilhaft, bei der die Schleifen nur einen einzigen ersten Richtungswechselpunkt und einen einzigen zweiten Richtungswechselpunkt aufweisen.

Eine weitere bevorzugte Ausführung sieht einen Richtungswechsel an den ersten und zweiten Richtungswechselpunkten in dem Bereich zwischen 45 ° bis 135 ° vor. Das ist insbesondere für die Ausführungen vorteilhaft, bei der die Schleifen jeweils mehrere erste Richtungswechselpunkte und mehrere zweite Richtungswechselpunkte aufweisen.

Vorzugsweise beträgt eine Summe der Richtungswechsel an den ersten Richtungswechselpunkten der jeweiligen Schleife zwischen 135 ° und 225 ° (besonders bevorzugt 180 °). Vorzugsweise beträgt eine Summe der Richtungswechsel an den zweiten Richtungswechselpunkten der jeweiligen Schleife zwischen 135 ° und 225 ° (besonders bevorzugt 180 °).

Vorzugsweise beträgt eine Summe der Richtungswechsel der ersten und zweiten Richtungswechselpunkte der jeweiligen Schleife 360 °.

Eine bevorzugte Ausführung sieht vor, dass die ersten und zweiten Verbindungsabschnitte der regelmäßigen Schleifen parallel zueinander angeordnet sind.

Je nach Lastfall kann aber auch bevorzugt sein, dass die ersten und zweiten Verbindungsabschnitte einer Schleife in einem Winkel zueinander angeordnet sind. Hierbei kann vorgesehen sein, dass der erste Verbindungsabschnitt einer Schleife quer über dem zweiten Verbindungsabschnitt der benachbarten Schleife angeordnet ist. Vorzugsweise beträgt der vorgenannte Winkel zwischen 1 ° und 45 °.

Eine besonders bevorzugte Ausgestaltung der Erfindung sieht vor, dass die ersten Richtungswechselpunkte der Schleifen entlang einer ersten Bauteilgrenze und/oder die zweiten Richtungswechselpunkte der Schleifen entlang einer zweiten Bauteilgrenze angeordnet sind. Die erste und die zweite Bauteilgrenze können in den Randbereichen des Bauteils oder eines funktionalen Abschnitts des Bauteils angeordnet sein.

Erfindungsgemäß ist bevorzugt, dass die ersten Richtungswechselpunkte auf einer ersten Linie und die zweiten Richtungswechsel auf einer zweiten Linie liegen. Vorzugsweise ist die erste und/oder die zweite Linie eine Gerade. Dann ist die Herstellung besonders einfach. Die erste und/oder die zweite Linie können in vorteilhaftet Weise auch eine der ersten oder zweiten Bauteilgrenze folgende Kurve sein. Vorzugsweise verläuft die erste Linie entlang der ersten Bauteilgrenze und die zweite Linie entlang der zweiten Bauteilgrenze. Besonders bevorzugt verläuft die erste Linie parallel zu der ersten Bauteilgrenze und/oder die zweite Linie parallel zu der zweiten Bauteilgrenze.

Erfindungsgemäß kann in vorteilhafter Weise vorgesehen sein, dass der erste und der zweite Verbindungsabschnitt quer zu der ersten und der zweiten Bauteilgrenze verlaufen.

Eine vorteilhafte Ausgestaltung sieht vor, dass die Schleifen jeweils einen zusammenhängenden Abschnitt des Faserbündels umfassen, der sich von einer ersten Bauteilgrenze zu der zweiten Bauteilgrenze und wieder zurück zur ersten Bauteilgrenze erstreckt. Vorzugsweise ist die erste Bauteilgrenze auf einer ersten Bauteilseite und die zweite Bauteilgrenze auf einer zweiten Bauteilseite angeordnet.

Eine hohe Stabilität bei guter Recyclingfähigkeit kann dadurch weiter gefördert werden, wenn die Schleifen mehrere erste Richtungswechselpunkte und/oder mehrere zweite Richtungswechselpunkte umfassen. Vorzugsweise weisen die Schleifen zwei erste Richtungswechselpunkte und zwei zweite Richtungswechselpunkte auf. Auf diese Weise können insbesondere im Bereich von Bauteilgrenzen Kräfte in unterschiedlichen Richtungen besser aufgenommen werden.

Dabei kann vorgesehen sein, dass das Faserbündel zwischen den ersten Richtungswechselpunkten der jeweiligen Schleife einen dritten Verbindungsabschnitt bildet. Das Faserbündel kann zwischen den zweiten Richtungswechselpunkten der jeweiligen Schleife einen vierten Verbindungsabschnitt bilden.

Vorzugsweise bilden die ersten, zweiten, dritten und vierten Verbindungsabschnitte der jeweiligen Schleife ein Parallelogramm. Insbesondere können die ersten, zweiten, dritten und vierten Verbindungsabschnitte der jeweiligen Schleife ein Rechteck mit abgerundeten Ecken bilden.

Eine besonders bevorzugte Ausgestaltung sieht vor, dass der dritte Verbindungsabschnitt entlang der ersten Bauteilgrenze und/oder der vierte Verbindungsabschnitt entlang der zweiten Bauteilgrenze verläuft. Vorzugsweise verläuft der dritte Verbindungsabschnitt parallel zu der ersten Bauteilgrenze und/oder der vierte Verbindungsabschnitt parallel zu der zweiten Bauteilgrenze.

Die Stabilität wird dadurch weiter gefördert, dass der dritte Verbindungsabschnitt und/oder der vierte Verbindungsabschnitt gerade ist.

Erfindungsgemäß kann vorgesehen sein, dass das Faserbündel ein durchgehendes Faserbündel ist. Vorzugsweise ist das Faserbündel ein Endlosfaserbündel. Das flächenförmige Gebilde ist vorzugsweise aus einem einzigen Faserbündel gebildet. Es kann aber auch mehrere Faserbündel umfassen. Erfindungsgemäß ist jedoch bevorzugt, wenn die Anzahl der Faserbündel klein ist, was die Herstellung und das Recycling erleichtert.

Die Stabilität des Bauteils kann dann weiter verbessert werden, wenn das Faserbündel eine Beschichtung aufweist. Hierdurch kann die Bindung zwischen der Matrix und dem Faserbündel verbessert werden. Die Beschichtung ist vorzugsweise vorab auf das Faserbündel bzw. dessen Filamente aufgebracht. Insbesondere kann die Beschichtung als Schlichte ausgebildet sein. Die Beschichtung erleichtert die Verarbeitung des Faserbündels zu dem flächenförmigen Gebilde. Insbesondere kann sie die Oberfläche des Faserbündels vor Abrasion schützen. Zudem kann sie zu einer stabilen Verbindung zwischen der Matrix und dem Faserbündel beitragen und damit die Stabilität des Bauteils verbessern.

Vorzugsweise umfasst die Beschichtung ein Polymer. Hierbei kann vorgesehen sein, dass die Beschichtung wenigstens eine Verbindung der Gruppe bestehend aus einer Epoxidverbindung, einem Olyhydroxyether, einem Polyphenylenoxid, einem Polysulfon, einem Silan und einem Cyanamid umfasst. Vorzugsweise umfasst die Beschichtung eine Epoxidverbindung. Diese kann insbesondere ausgehärtet sein, bevor das Faserbündel in die Matrix eingebettet wird. Eine Beschichtung mit einer Epoxidverbindung erhöht die Stabilität insbesondere dann, wenn die Matrix ein Polyepoxid enthält.

Erfindungsgemäß kann das Faserbündel vollständig oder teilweise in die Matrix eingebettet sein. Dabei ist bevorzugt, wenn das Faserbündel vollständig in die Matrix eingebettet ist.

Vorzugsweise ist das flächenförmige Gebilde ein textiles Gebilde.

Erfindungsgemäß ist bevorzugt, wenn das Faserbündel in dem flächenförmigen Gebilde ohne eine feste Verbindung zwischen einzelnen Abschnitten des Faserbündels angeordnet ist. Vorzugsweise weist das flächenförmige Gebilde keine Verknüpfungen des Faserbündels auf, insbesondere keine Knoten oder Maschen. Das erleichtert die Herstellung und verbessert die Recyclingfähigkeit, da beim Recycling das Faserbündel ohne Knoten wieder aufgewickelt werden kann.

Die Recyclingfähigkeit wird dann weiter verbessert, wenn das Faserbündel derart in dem flächenförmigen Gebilde angeordnet ist, dass es nach Entfernung der Matrix durch Zug an einem Ende des Faserbündels ohne Bildung von Knoten abgezogen werden kann. Hierbei ist bevorzugt, wenn das Faserbündel derart in dem flächenförmigen Gebilde angeordnet ist, wenn es nach Entfernung der Matrix durch Zug an einem Ende des Faserbündels normal zur Bauteiloberfläche ohne Bildung von Knoten abgezogen werden kann, ohne dass hierbei das flächenförmige Gebilde bewegt wird.

Eine hohe Stabilität bei guter Recyclingfähigkeit kann dadurch weiter gefördert werden, dass das Faserbündel in dem flächenförmigen Gebilde in wenigstens einer Lage angeordnet ist. Die regelmäßigen Schleifen können hierbei in der wenigstens einen Lage angeordnet sein. Eine besonders bevorzugte Ausgestaltung sieht vor, dass das flächenförmige Gebilde mehrere übereinander angeordnete Lagen umfasst, die jeweils regelmäßig angeordnete Schleifen umfassen. Vorzugsweise sind die regelmäßigen Schleifen in der jeweiligen Lage versetzt zueinander angeordnet. Vorzugsweise umfasst das flächenförmige Gebildet zwischen zwei und 50 Lagen, besonders bevorzugt zwischen zwei und 20 Lagen.

Eine weitere Verbesserung kann dann erreicht werden, wenn die regelmäßigen Schleifen in den unterschiedlichen Lagen unterschiedlich ausgerichtet sind.

Erfindungsgemäß kann vorgesehen sein, dass das Faserbündel ein Bündel aus nebeneinander angeordneten Filamenten aufweist. Vorzugsweise ist das Faserbündel als "Roving" ausgebildet. Die Filamente können in dem Faserbündel parallel zueinander angeordnet sein.

Vorzugsweise hat das Faserbündel einen ovalen oder kreisförmigen Querschnitt.

Eine besonders bevorzugte Ausgestaltung sieht vor, dass das Faserbündel mehr als 3000 Filamente aufweist. Vorzugsweise umfasst das Faserbündel weniger als 60000 Filamente.

Vorzugsweise weist das Faserbündel eine Stärke zwischen 60 dtex und 4.800 dtex auf. 1 dtex entspricht dabei einem Gewicht von 1 g pro 1.000 m Faserbündel.

Vorzugsweise weist das Faserbündel in dem flächenförmigen Gebilde eine Länge von mehr als 5 m auf. Besonders bevorzugt beträgt die Gesamtlänge des Faserbündels mehr als 10 m und/oder weniger als 10000 m.

Die Vorteile der Erfindung werden dadurch weiter gefördert, wenn das Faserbündel Filamente aus Carbonfaser, Glasfaser, Polymerfaser und/oder Naturfaser umfasst. Vorzugsweise umfasst das Faserbündel Filamente aus Carbonfaser, Glasfaser oder Polymerfaser. Besonders bevorzugt umfasst das Faserbündel ausschließlich Filamente aus Kohlefaser, Glasfaser oder Polymerfaser.

Die Naturfasern sind vorzugsweise wenigstens eine Faserart ausgewählt aus der Gruppe bestehend aus Flachs, Hanf und Sisal.

Die Polymerfasern können vorzugsweise Aramid- und/oder Polyethylen-Fasern (PE-Fasern) umfassen.

Vorzugsweise liegt ein Durchmesser der Filamente des Faserbündels in dem Bereich von mehr als 5 µm und/oder von weniger als 25 µm. Für Carbonfasern sind insbesondere Durchmesser der Filamente zwischen 5 µm und 9 µm bevorzugt. Für Glasfasern sind insbesondere Durchmesser der Filamente zwischen 6 µm und 20 µm bevorzugt. Für Kunststofffasern sind insbesondere Durchmesser der Filamente zwischen 8 µm und 15 µm bevorzugt.

Erfindungsgemäß kann vorgesehen sein, dass die Filamente in dem Faserbündel verdreht angeordnet sind. Das erhöht die Eigenstabilität und erleichtert das Verlegen des Faserbündels. Erfindungsgemäß können aber auch Faserbündel ohne Verdrehung eingesetzt werden, bei denen sich die Filamente genau in Längsrichtung des Faserbündels erstrecken.

Eine besonders hohe Stabilität kann dann erreicht werden, wenn sich der erste und der zweite Verbindungsabschnitt parallel zu einer Bauteiloberfläche des Bauteils erstrecken.

Eine bevorzugte Ausgestaltung der Erfindung sieht vor, dass das Faserbündel an den ersten und den zweiten Richtungswechselpunkten jeweils ohne Bogenwechsel an den ersten und zweiten Richtungswechselpunkten angeordnet ist. Das trägt zu einer schnellen Herstellung und leichteren Verlegung des Faserbündels bei. Ein Bogenwechsel bezeichnet dabei einen mathematischen Wendepunkt, bei dem sich das Krümmungsverhalten z. B. von einer Linkskurve zu einer Rechtskurve oder umgekehrt ändert.

Eine weitere bevorzugte Ausgestaltung der Erfindung sieht vor, dass an den ersten Richtungswechselpunkten und den zweiten Richtungswechselpunkten jeweils ein Bogenwechsel erfolgt.

Die erfindungsgemäßen Vorteile können dadurch weiter gefördert werden, wenn die Matrix ein polymeres Kunststoffmaterial umfasst. Vorzugsweise umfasst das polymere Kunststoffmaterial einen duroplastischen Werkstoff, einen thermoplastischen Werkstoff oder ein Vitrimer.

Als duroplastischer Werkstoff eignen sich insbesondere Polyepoxide, wie Epoxidharze.

Vorzugsweise wird ein solvolysefähiger duroplastischer Werkstoff verwendet, um die Rückgewinnung des Faserbündels und/oder des Werkstoffs zu erleichtern. Es können aber auch nicht-solvolysefähige duroplastische Werkstoffe verwendet werden, wenn eine leichte Rückgewinnung des Faserbündels bei dem Recycling eine untergeordnete Rolle spielt. Das Auflösen des duroplastischen Werkstoffs beim Recycling kann dadurch erfolgen, dass das polymere Material thermisch und/oder chemisch in kürzere Polymere oder Monomere aufgespalten wird.

Als thermoplastische Werkstoffe kann die Matrix vorzugsweise wenigstens eine Verbindung ausgewählt aus der Gruppe bestehend aus Polymethylmethacrylat (PMMA), Polyamid (PA), Polyetherketon (PEK), Polyetherketonketon (PEKK), Polyetheretherketon (PEEK) aufweisen. Zur Rückgewinnung des Faserbündels und/oder des thermoplastischen Werkstoffs können die thermoplastischen Werkstoffe beim Recycling durch Erwärmung verflüssigt werden.

Vitrimere, die für die Matrix in vorteilhafter Weise eingesetzt werden können, sind eine Kunststoffklasse, die sich von klassischen Duromeren ableitet und starke Ähnlichkeiten mit ihnen besitzt. Sie sind aus kovalenten Netzwerken aufgebaut, die ihre Topologie durch thermisch aktivierte Bindungsaustauschreaktionen verändern können. Vitrimere sind in der Regel starke Glasbildner. Bei hohen Temperaturen fließen sie und verhalten sich dabei wie eine viskoelastische Flüssigkeit. Bei niedrigen Temperaturen sind die Austauschreaktionen unmessbar langsam und die Vitrimere verhalten sich wie klassische Duromere. Die Polymere der Vitrimere können chemisch in Monomere gespalten und somit wieder verflüssigt werden. Hierzu können insbesondere Diethylenetriamine, Propylamine, Methylethylketone (MEK) oder Xylene zur Auflösung der Vitrimere verwendet werden.

Vorzugsweise ist das polymere Kunststoffmaterial so ausgewählt, dass es ohne wesentliche Beschädigung des Faserbündels wieder entfernt werden kann.

Eine Ausgestaltung der Erfindung sieht vor, dass das flächenförmige Gebilde parallel zu einer Oberfläche des Bauteils angeordnet ist. Vorzugsweise ist das flächenförmige Gebilde parallel zu einer ebenen oder konkaven Oberfläche des Bauteils angeordnet. Eine Anordnung parallel zu einer konkaven Oberfläche des Bauteils kann dadurch erhalten werden, dass das flächenförmige Gebilde bei der Herstellung auf einer konvexen Auflagefläche einer Form angeordnet wird.

Erfindungsgemäß kann vorgesehen sein, dass das Bauteil wenigstens eine Oberfläche mit einer Wölbung aufweist, wobei das flächenförmige Gebilde entlang der Wölbung angeordnet ist. Das trägt zu einer hohen Stabilität bei.

Eine weitere bevorzugte Ausführungsform sieht vor, dass der erste Verbindungsabschnitt entlang der kürzesten Verbindung zwischen dem ersten und dem zweiten Richtungswechselpunkt entlang der Oberfläche mit einer Wölbung angeordnet ist.

Erfindungsgemäß ist bevorzugt, wenn die Matrix einen Massivkörper bildet. Bei solchen nicht als Hohlkörper ausgebildeten Bauformen des Bauteils kommen die Vorteile der Erfindung besonders zum Tragen.

Vorzugsweise weist das Bauteil eine ebene oder eine konvex-konkave Form auf. Bei der konvex-konkaven Form kann eine Seite des Bauteils eine konkave und eine andere Seite des Bauteils eine konvexe Form aufweisen.

Die Erfindung stellt sich darüber hinaus die Aufgabe, ein Verfahren zur Herstellung des beschriebenen faserverstärkten Bauteils anzugeben.

Das Verfahren kann folgende Schritte aufweisen:
- Bereitstellen eines Faserbündels;
- Bereitstellen einer Bauteilform, umfassend eine Ablagefläche sowie Führungselemente für das Faserbündel;
- Ablegen des Faserbündels auf der Ablagefläche zu einem flächenförmigen Gebilde mit mehreren regelmäßigen Schleifen, wobei das Faserbündel um die Führungselementen herum gelegt ist, um an diesen jeweils erste oder zweite Richtungswechselpunkte zu bilden;
- Entfernen der Führungselemente, wobei das flächenförmige Gebilde auf der Ablagefläche gehalten wird;
- Schließen der Bauteilform, wobei das flächenförmige Gebilde in der Bauteilform aufgenommen ist;
- Einbringung der Matrix in flüssiger Form und anschließende Erhärtung der Matrix.

Mit dem Verfahren können die beschriebenen Bauteile zuverlässig in hoher Qualität hergestellt werden. Zudem können eine hohe Herstellungsgeschwindigkeit und geringe Herstellungskosten erreicht werden.

In vorteilhafter Weise kann das Faserbündel auf einer Spule oder Rolle aufgewickelt bereitgestellt werden.

Das Ablegen kann besonders vorteilhaft mit einem computergesteuerten Verlegekopf erfolgen. Dieser kann vorzugsweise 3D-beweglich sein. Insbesondere kann der Verlegekopf ein Roboterkopf sein. Das Faserbündel kann beim Ablegen auf der Ablagefläche von dem Verlegekopf um die Führungselemente herum geführt werden. Das erlaubt es, das Faserbündel in der gewünschten Weise in regelmäßigen Schleifen anzuordnen.

Die Führungselemente können Stifte umfassen. Vorzugsweise sind die Stifte in wenigstens einer Reihe angeordnet. Vorzugsweise sind die Stiftreihen entlang der ersten oder zweiten Bauteilgrenze angeordnet.

Vorzugsweise wird das Verfahren mit der unten beschriebenen Vorrichtung durchgeführt.

Die Herstellung wird dadurch vereinfacht, wenn das Faserbündel ohne Vorimprägnierung mit dem Material der Matrix (keine Prepregs) abgelegt wird.

Weitere Details des erfindungsgemäßen Verfahrens ergeben sich aus der Beschreibung des Bauteils und der Vorrichtung zur Herstellung des Bauteils.

Die Erfindung stellt sich darüber hinaus die Aufgabe, eine Vorrichtung zur Herstellung des beschriebenen faserverstärkten Bauteils anzugeben.

Die erfindungsgemäße Vorrichtung zur Herstellung des beschriebenen Bauteils umfasst einen beweglichen Verlegekopf für ein Faserbündel, eine Bauteilform, umfassend ein erstes Formenteil und ein benachbart zum ersten Formenteil angeordnetes zweites Formenteil, wobei das erste Formenteil eine Ablagefläche für das flächenförmige Gebilde bildet, wobei an dem zweiten Formenteil Führungselemente für das Faserbündel angeordnet sind, wobei der bewegliche Verlegekopf dazu eingerichtet ist, das Faserbündel um die Führungselemente herum auf der Ablagefläche geordnet abzulegen.

Mit der Vorrichtung können die beschriebenen Bauteile zuverlässig in hoher Qualität hergestellt werden. Zudem können eine hohe Herstellungsgeschwindigkeit und geringe Herstellungskosten erreicht werden. Insbesondere ist es möglich, mit dem ersten Formenteil mit der Ablagefläche und mit dem zweiten Formenteil mit den Führungselementen das Faserbündel gezielt in regelmäßigen Schleifen anzuordnen.

Vorzugsweise weist die Vorrichtung eine Steuerung auf, um das Faserbündel durch den Verlegekopf entsprechend einem vordefinierten Verlegeplan um die Führungselemente herum in regelmäßigen Schleifen auf der Ablagefläche abzulegen.

Eine bevorzugte Ausgestaltung sieht vor, dass das zweite Formenteil beweglich ist, sodass es nach dem Ablegen des flächenförmigen Gebildes von dem ersten Formenteil entfernbar ist. Das ermöglicht es, nach dem Ablegen des Faserbündels das zweite Formenteil mit den Führungselementen zu entfernen.

Vorzugsweise umfasst die Vorrichtung ein drittes Formenteil, das derart gegenüber dem ersten Formenteil anordenbar ist, dass das flächenförmige Gebilde zwischen dem ersten und dem dritten Formenteil angeordnet ist.

Hierbei kann vorgesehen sein, dass das dritte Formenteil eine Gegenfläche aufweist und derart beweglich angeordnet ist, dass es mit der Gegenfläche gegen das flächige Gebilde bewegt werden kann, damit dieses beim Entfernen des zweiten Formenteils gehalten wird. Auf diese Weise können die regelmäßigen Schleifen auch nach dem Abnehmen des zweiten Formenteils beibehalten werden, bis die Matrix in die Form eingebracht wird und das flächenförmige Gebilde einschließt.

Erfindungsgemäß kann eine weitere Verbesserung erreicht werden, wenn das dritte Formenteil wenigstens eine von der Gegenfläche vorspringende Nase aufweist, um das flächenförmige Gebilde auf der Ablagefläche zu halten.

Vorzugsweise bilden die Ablagefläche und die Gegenfläche Abschnitte der Innenfläche der Bauteilform.

Vorzugsweise sind die Führungselemente als Stifte ausgebildet. Vorzugsweise weist das zweite Formenteil Ausnehmungen auf, in denen die Führungselemente angeordnet sind.

Erfindungsgemäß hat sich bewährt, wenn die Führungselemente einen Durchmesser aufweisen, der zwischen 1 mm und 10 mm liegt. Auf diese Weise lassen sich Schleifen herstellen, die eine hohe Belastbarkeit des Bauteils erreichen.

Eine bevorzugte Ausgestaltung sieht vor, dass die Vorrichtung ein viertes Formenteil aufweist, das nach Entfernen des zweiten Formenteils an dessen Stelle benachbart zu dem ersten Formenteil anordenbar ist. Vorzugsweise bildet das vierte Formenteil einen weiteren Abschnitt der Innenfläche der Bauteilform. Das ermöglicht es, das Bauteil auch im Randbereich in der gewünschten Form auszubilden. Dabei kann vorgesehen sein, dass das vierte Formenteil keine Führungselemente für das flächenförmige Gebilde aufweist.

Eine weitere verbesserte Ausführungsform sieht vor, dass die Vorrichtung ein fünftes Formenteil aufweist, das benachbart zu dem dritten Formenteil und gegenüber dem vierten Formenteil anordenbar ist. Vorzugsweise bildet das fünfte Formenteil einen weiteren Abschnitt der Innenfläche der Bauteilform.

Erfindungsgemäß ist besonders bevorzugt, dass das zweite Formenteil an einem Rand des ersten Formenteils angeordnet oder anordenbar ist. Vorzugsweise ist das zweite Formenteil dazu ausgebildet, das erste Formenteil zu umschließen. Das zweite Formenteil kann insbesondere rahmenförmig ausgebildet sein.

Erfindungsgemäß ist besonders bevorzugt, dass das vierte Formenteil an einem Rand des ersten Formenteils angeordnet oder anordenbar ist. Vorzugsweise ist das vierte Formenteil dazu ausgebildet, das erste Formenteil zu umschließen. Das vierte Formenteil kann insbesondere rahmenförmig ausgebildet sein.

Erfindungsgemäß ist besonders bevorzugt, dass das fünfte Formenteil an einem Rand des dritten Formenteils anordenbar oder angeordnet ist. Vorzugsweise ist das fünfte Formenteil dazu ausgebildet, das dritte Formenteil zu umschließen. Das fünfte Formenteil kann insbesondere rahmenförmig ausgebildet sein.

Erfindungsgemäß ist besonders bevorzugt, dass das erste Formenteil eine ebene Auflagefläche und das dritte Formenteil eine ebene Gegenfläche aufweist. Damit eignet sich die Vorrichtung zur Herstellung von Bauteilen mit ebener Oberfläche.

Eine weitere bevorzugte Ausführungsform sieht vor, dass das erste Formenteil eine konvexe Auflagefläche und das dritte Formenteil eine konkave Gegenfläche aufweist. Auf diese Weise können konvex-konkave Bauteile hergestellt werden.

Weitere Details der erfindungsgemäßen Vorrichtung ergeben sich aus der Beschreibung des Bauteils sowie des Verfahrens zur Herstellung des Bauteils.

Die Erfindung stellt sich darüber hinaus die Aufgabe, ein Verfahren zum Recyclen des beschriebenen faserverstärkten Bauteils anzugeben.

Das erfindungsgemäße Verfahren zum Recyclen des beschriebenen faserverstärkten Bauteils umfasst die Schritte:
- Bereitstellen des faserverstärkten Bauteils;
- Entfernen der Matrix des faserverstärkten Bauteils;
- Aufnehmen und Abziehen des Faserbündels des flächenförmigen Gebildes.

Das Entfernen der Matrix kann durch Auflösen der Matrix erfolgen. Diese kann z. B. als Solvolyse mit einem flüssigen Lösungsmittel in einem Behälter durchgeführt werden. Hierbei wird das Bauteil in das Lösungsmittelbad eingebracht, das die Matrix auflöst. Das Auflösen kann je nach Material der Matrix ggf. auch mit thermischer Unterstützung erfolgen. Das ist insbesondere bei Vitrimeren, Duroplasten und Thermoplasten der Fall.

Das abgezogene Faserbündel kann beispielsweise auf einer Spule aufgewickelt werden. Es steht dann für die Herstellung eines neuen faserverstärkten Bauteils wieder zur Verfügung.

Weitere Details der erfindungsgemäßen Vorrichtung ergeben sich aus der Beschreibung des Bauteils sowie des Verfahrens zur Herstellung des Bauteils.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

### Es zeigen:

- Fig. 1:: eine schematische Darstellung einer ersten Ausführungsform eines faserverstärkten Bauteils;
- Fig. 2:: eine schematische Darstellung zur Illustrierung der Herstellung des faserverstärkten Bauteils aus Fig. 1;
- Fig. 3:: eine schematische Darstellung zur Illustrierung der Herstellung des faserverstärkten Bauteils aus Fig. 1;
- Fig. 4a - 4h:: schematische Darstellungen der schrittweisen Herstellung des faserverstärkten Bauteils aus Fig. 1 mit einer Vorrichtung zur Herstellung des faserverstärkten Bauteils;
- Fig. 5a und 5b:: eine erste Anordnung des Faserbündels für ein faserverstärktes Bauteil in regelmäßigen Schleifen;
- Fig. 5c und 5d:: eine zweite Anordnung des Faserbündels für ein faserverstärktes Bauteil in regelmäßigen Schleifen;
- Fig. 5e und 5f:: eine dritte Anordnung des Faserbündels für ein faserverstärktes Bauteil in regelmäßigen Schleifen;
- Fig. 6:: eine zweite Ausführungsform eines faserverstärkten Bauteils;
- Fig. 7a:: Elemente der Vorrichtung zur Herstellung des faserverstärkten Bauteils aus Fig. 6;
- Fig. 7b:: die Elemente der Vorrichtung aus Fig. 7a mit abgelegtem Faserbündel;
- Fig. 7c:: Elemente der Vorrichtung zur Herstellung des faserverstärkten Bauteils aus Fig. 6;
- Fig. 8:: eine schematische Darstellung eines Abschnitts eines Faserbündels;
- Fig. 9:: eine schematische Darstellung des Recyclings des faserverstärkten Bauteils aus Fig. 1.

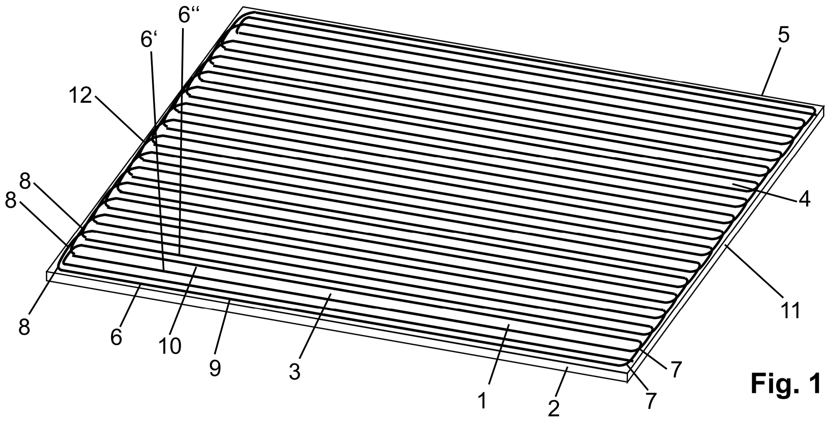

Fig. 1 zeigt ein faserverstärktes Bauteil 1 mit einem Körper 2. Die Figur zeigt das faserverstärkte Bauteil 1 am Beispiel eines faserverstärkten Bauteils 1 mit einem ebenen rechteckigen Körper 2. Diese Darstellung dient der Erläuterung des Aufbaus des Bauteils, das im Einzelfall anders als das dargestellte Ausführungsbeispiel ausgebildet sein kein.

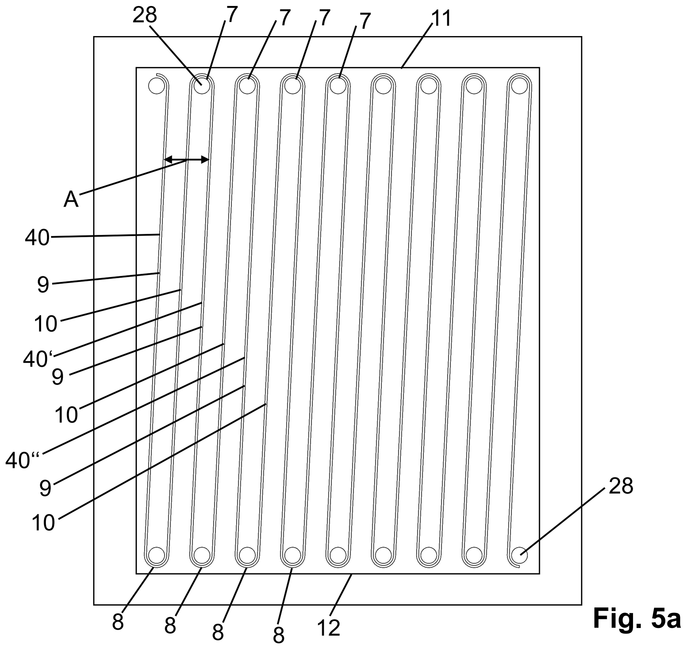

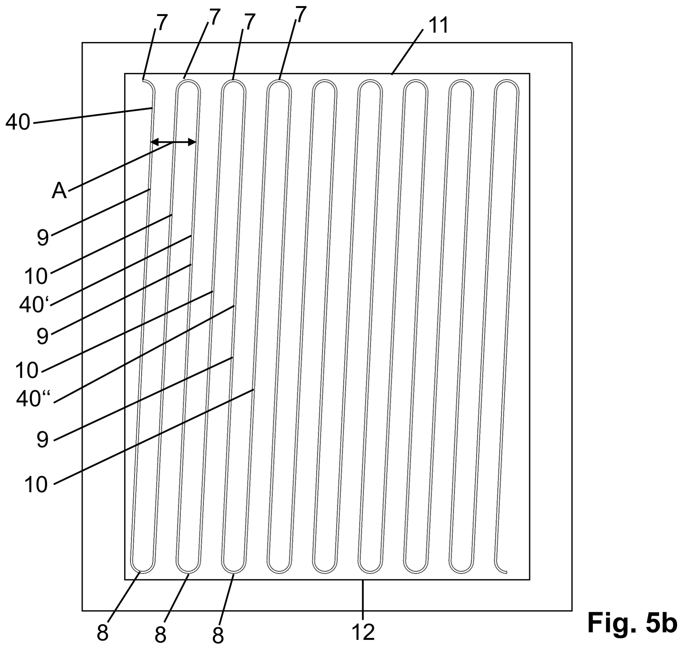

Der Körper 2 weist eine Matrix 3 auf, die einen polymeren Werkstoff umfasst. In die Matrix 3 eingebettet ist ein schematisch dargestelltes flächenförmiges Gebilde 4, das durch ein Faserbündel 5 gebildet ist. Dabei ist das Faserbündel 5 in dem flächenförmigen Gebilde 4 in mehreren regelmäßigen Schleifen 6, 6', 6" angeordnet. Die Schleifen 6, 6', 6" sind dabei überlappend angeordnet. Stellvertretend für die Vielzahl der Schleifen sind drei benachbarte Schleifen mit den Bezugszeichen 6, 6' und 6" gekennzeichnet. Die Schleifen 6, 6', 6" weisen jeweils erste und zweite Richtungswechselpunkte 7 und 8 auf. Im dargestellten Ausführungsbeispiel weisen die Schleifen 6, 6' ,6" jeweils zwei erste Richtungswechselpunkte 7 und zwei zweite Richtungswechselpunkte 8 auf. Dies wird in Zusammenhang mit den Fig. 5a und 5b noch genauer erläutert. An den Richtungswechselpunkten 7, 8 bildet das Faserbündel 5 jeweils gekrümmte Abschnitte. Zwischen den ersten und zweiten Richtungswechselpunkten 7, 8 der Schleife 6 bildet das Faserbündel 5 jeweils einen ersten und einen zweiten Verbindungsabschnitt 9, 10.

Die ersten Richtungswechselpunkte 7 sind entlang einer ersten Bauteilgrenze 11 angeordnet. Die erste Bauteilgrenze 11 bildet den in Fig. 1 rechts dargestellten Rand des Bauteils 1. Die zweiten Richtungswechselpunkte 8 sind entlang einer zweiten Bauteilgrenze 12 angeordnet. Die zweite Bauteilgrenze 12 bildet den in Fig. 1 links dargestellten Rand des Bauteils 1.

Die ersten Richtungswechselpunkte 7 liegen auf einer ersten Linie und die zweiten Richtungswechselpunkte 8 liegen auf einer zweiten Linie. Die erste Linie und die zweite Linie sind im dargestellten Ausführungsbeispiel Geraden, die sich entlang der ersten Bauteilgrenze 11 bzw. zweiten Bauteilgrenze 12 erstrecken. Der erste und der zweite Verbindungsabschnitt 9, 10 verlaufen quer zu der ersten und der zweiten Bauteilgrenze 11, 12.

Fig. 1 zeigt das in der Matrix 3 angeordnete flächenförmige Gebilde 4 schematisch. Wenn die Matrix 3 undurchsichtig ist, ist bei einem tatsächlichen faserverstärkten Bauteil 1 das in die Matrix eingebettete Faserbündel 5 äußerlich nicht in jedem Fall zu erkennen. Dargestellt ist zur Erläuterung des Aufbaus ein flächenförmiges Gebilde 4 in einlagiger Ausführung. Die regelmäßigen Schleifen 6, 6', 6" sind dabei versetzt nebeneinander angeordnet. Die Schleifen 6, 6', 6" weisen dabei dieselbe Grundform auf.

Die Schleifen 6, 6', 6" werden dabei jeweils durch aneinander anschließende Faserbündelabschnitte des Faserbündels 5 gebildet. Im dargestellten Ausführungsbeispiel wird das flächenförmige Gebilde 4 durch ein einziges durchgehendes Faserbündel 5 gebildet. Das erleichtert das spätere Recycling. Anders als dargestellt, kann das flächenförmige Gebilde 4 aber auch aus mehreren Faserbündeln 5 gebildet sein, wobei bevorzugt ist, wenn das flächenförmige Gebilde nur einen oder wenige Faserbündel 5 aufweist.

Die Schleifen 6, 6', 6" umfassen jeweils einen zusammenhängenden Abschnitt des Faserbündels 5, der sich von der ersten Bauteilgrenze 11 zu der zweiten Bauteilgrenze 12 und wieder zurück zu der ersten Bauteilgrenze 11 erstreckt.

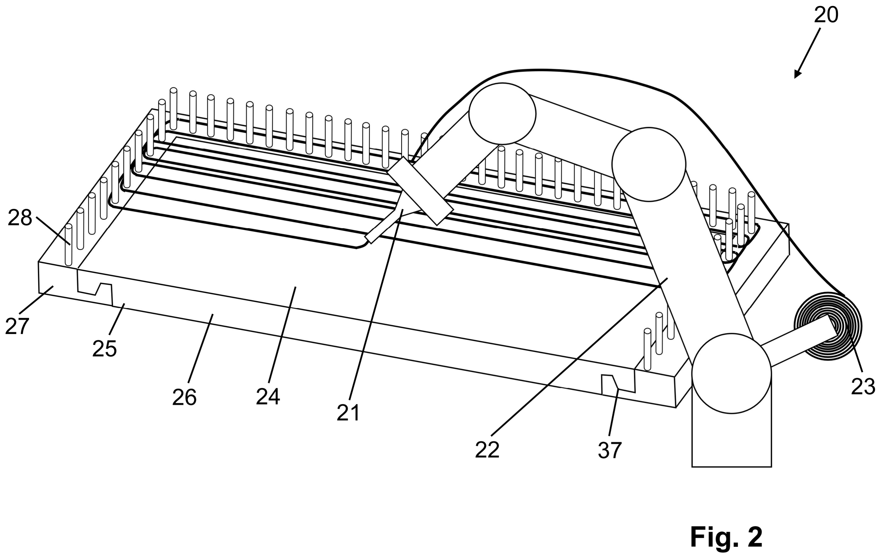

Fig. 2 zeigt schematisch die Herstellung des faserverstärkten Bauteils aus Fig. 1 mit einer Vorrichtung 20 zur Herstellung eines faserverstärkten Bauteils. Die Vorrichtung 20 umfasst einen beweglichen Verlegekopf 21. Dieser ist an einem 3-D-beweglichen Roboterarm 22 angeordnet. Dem Roboterarm 22 zugeordnet ist ein Vorrat 23 des Faserbündels 5. Dieser kann, wie dargestellt, als eine Spule ausgebildet sein, auf der das Faserbündel 5 aufgenommen ist. Das Faserbündel wird von dem Vorrat 23 dem Verlegekopf 21 zugeführt. Mit dem Verlegekopf 21 kann das Faserbündel 5 in regelmäßigen Schleifen 6 auf einer Ablagefläche 24 abgelegt werden.

Die dargestellte Vorrichtung 20 ermöglicht die Ablage des Faserbündels 5 in unterschiedlich ausgebildeten Schleifen 6. Auf diese Weise kann das Bauteil in vielfältiger Hinsicht optimiert werden. Zum einen kann das Faserbündel 5 so definiert auf der Ablagefläche 24 angeordnet werden, dass in dem fertigen faserverstärkten Bauteil auftretende Kräfte und insbesondere Zugkräfte durch das Faserbündel 5 optimal aufgenommen werden können. Auch ist es möglich, in höher beanspruchten Bereichen des Bauteils die Schleifen 6 dichter und/oder in einer größeren Anzahl von Lagen zu verlegen als in weniger beanspruchten Bereichen. Auf diese Wiese können mit geringem Verbrauch an dem Faserbündel 5 optimierte Bauteile hergestellt werden.

Nachfolgend werden wir die Herstellung des faserverstärkten Bauteils 1 in mehreren Schritten erläutern.

Fig. 2 zeigt, dass die Vorrichtung 20 zur Herstellung des Bauteils eine Bauteilform 25 aufweisen kann, die ein erstes Formenteil 26 aufweist, das die Ablagefläche 24 bildet. Dargestellt ist weiterhin ein zweites Formenteil 27, das Führungselemente 28 für das Faserbündel 5 aufweist.

Um den Aufbau des ersten und zweiten Formenteils 27, 28 besser darstellen zu können, ist in Fig. 2 nur jeweils eine Hälfte des ersten und zweiten Formenteils 27, 28 perspektivisch dargestellt. Das zweite Formenteil 27 ist an einem Rand des ersten Formenteils 26 angeordnet. Dabei umschließt das zweite Formenteil 27 das erste Formenteil 26. Im dargestellten Ausführungsbeispiel ist das zweite Formenteil rahmenförmig ausgebildet.

In dem zweiten Formenteil 27 sind die als Stifte ausgebildeten Führungselemente 28 angeordnet. Diese stehen gegenüber der Ablagefläche 24 vor. Zwischen den Führungselementen 28 sind dabei Abstände ausgebildet. Mit dem Verlegekopf 21 kann das Faserbündel um die einzelnen Führungselemente 28 herum geführt und auf der Ablagefläche 24 abgelegt werden. Auf diese Weise kann mit der Vorrichtung 20 eine Vielzahl von regelmäßigen Schleifen 6 auf der Ablagefläche 24 abgelegt werden. Die Führungselemente 28 sorgen dabei dafür, dass beim Ablegen das Faserbündel 5 an der gewünschten Position verbleibt.

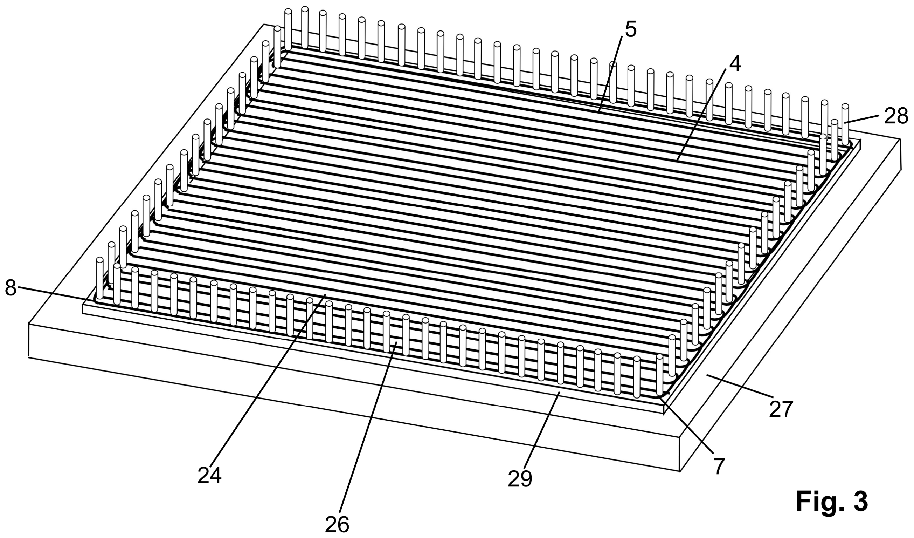

Fig. 3 zeigt das erste und das zweite Formenteil 26 und 27 nach dem Ablegen des Faserbündels 5 in mehreren nebeneinander angeordneten Schleifen 6. In Fig. 3 sind das erste und das zweite Formenteil 26, 27 vollständig perspektivisch dargestellt. Dabei zeigt Fig. 3 auch die rahmenförmige Ausgestaltung des zweiten Formenteils 27, das das erste Formenteil 26 umschließt. In Fig. 3 ist schematisch angedeutet, dass das flächenförmige Gebilde 4 eine Lage 29 aufweist.

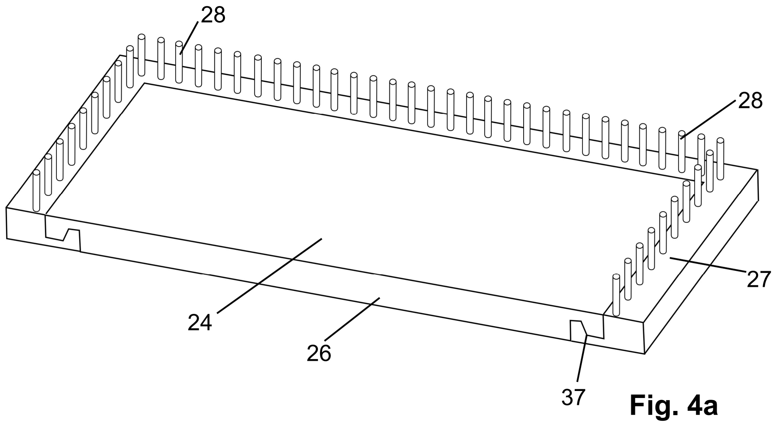

Fig. 4a zeigt noch einmal das erste und das zweite Formenteil 26, 27 aus Fig. 2. Dabei wird in den Fig. 4a bis 4h jeweils zur besseren Darstellung des Aufbaus nur eine Hälfte der Bauteilform 25 dargestellt. Fig. 4a zeigt das erste und zweite Formenteil 26, 27 vor dem Ablegen des Faserbündels 5. In dem Bereich 37 ist zwischen dem ersten und zweiten Formenteil 26, 27 ein Formschluss ausgebildet.

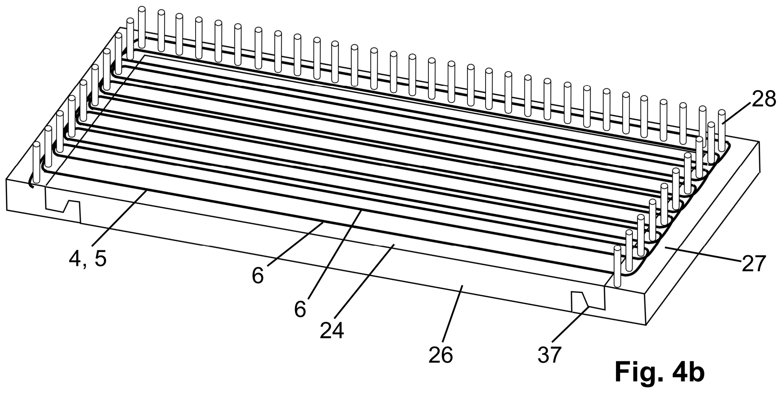

Fig. 4b zeigt das erste und zweite Formenteil 26, 27 aus Fig. 4a nach dem Ablegen des Faserbündels 5 in mehreren regelmäßigen Schleifen 6 auf der Ablagefläche 24.

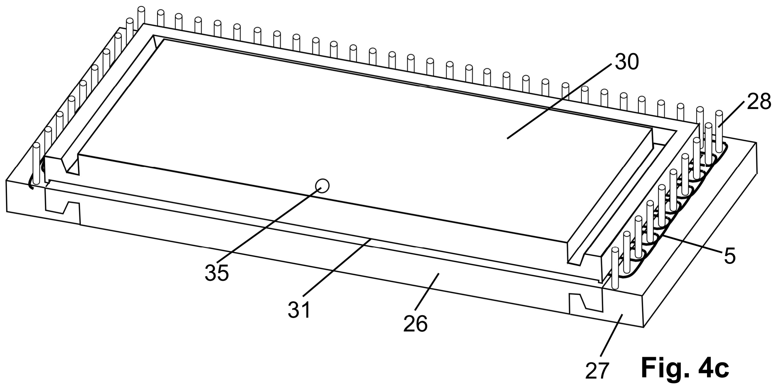

Fig. 4c illustriert, dass die Vorrichtung 20 ein drittes Formenteil 30 umfassen kann, das derart gegenüber dem ersten Formenteil 26 anordenbar ist, dass das flächenförmige Gebilde 4 zwischen dem ersten und dem dritten Formenteil 26, 30 angeordnet ist. Mit dem dritten Formenteil 30 kann das flächenförmige Gebilde 4 mit den Schleifen 6 während der weiteren Herstellung fixiert werden, sodass die Schleifen 6 in der gewünschten Position bleiben. Hierzu weist das dritte Formenteil 30 eine Gegenfläche 31 auf. Die Gegenfläche 31 ist gegenüber der Ablagefläche 24 angeordnet. Die Ablagefläche 24 und die Gegenfläche 31 bilden Abschnitte der Innenfläche der Bauteilform 25, in die die Matrix 3, wie unten erläutert, eingebracht werden kann. Im dargestellten Ausführungsbeispiel sind die Auflagefläche 24 und die Gegenfläche 31 eben ausgebildet.

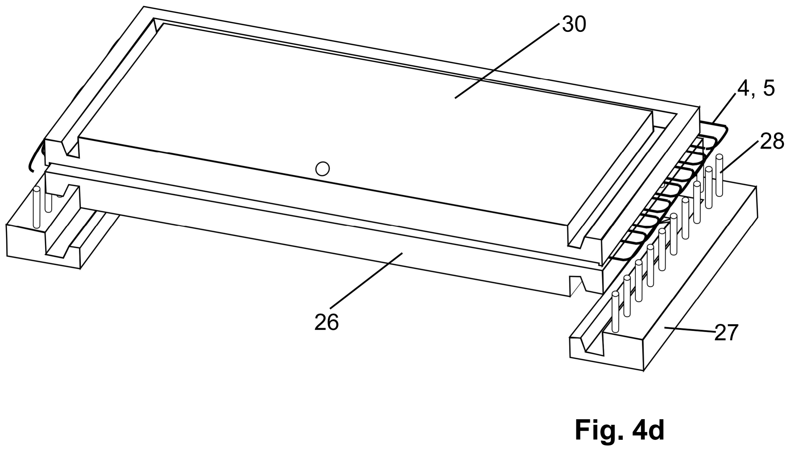

Fig. 4d zeigt, wie in einem nächsten Schritt das bewegliche zweite Formenteil 27 nach dem Ablegen des flächenförmigen Gebildes 4 entfernt wird. Dabei wird das zweite Formenteil 27 mit den Führungselementen 28 aus den Schleifen 6 herausgezogen. Hierbei wird das flächenförmige Gebilde 4 zwischen dem dritten Formenteil 30 und dem ersten Formenteil 26 in Position gehalten.

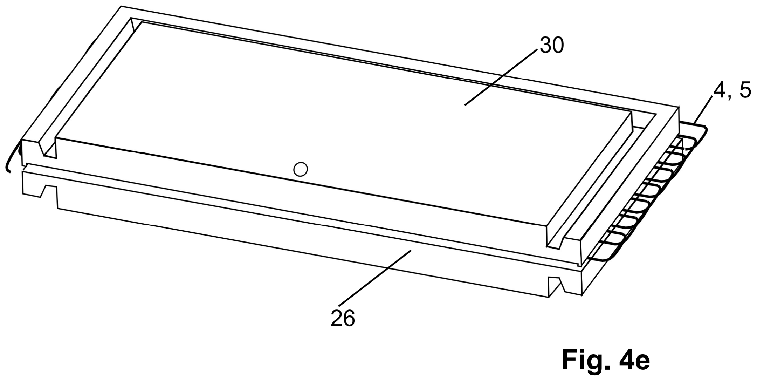

Fig. 4e zeigt das erste und das dritte Formenteil 26, 30 nach dem vollständigen Entfernen des zweiten Formenteils 27.

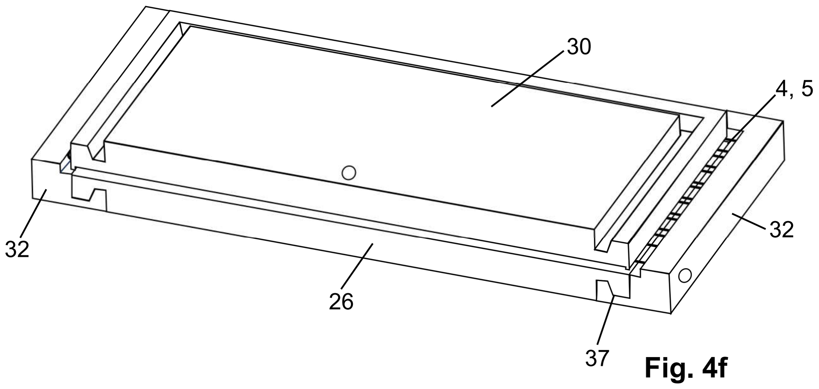

Fig. 4f zeigt, dass die Vorrichtung ein viertes Formenteil 32 aufweist, dass nach dem Entfernen des zweiten Formenteils 27 an dessen Stelle benachbart zu dem ersten Formenteil 26 angeordnet wird. Das vierte Formenteil bildet einen weiteren Abschnitt der Innenfläche der Bauteilform 25.

Das vierte Formenteil 32 ist an einem Rand des ersten Formenteils 26 anordenbar. Das vierte Formenteil 32 kann das erste Formenteil 26 umschließen und ist rahmenförmig ausgebildet.

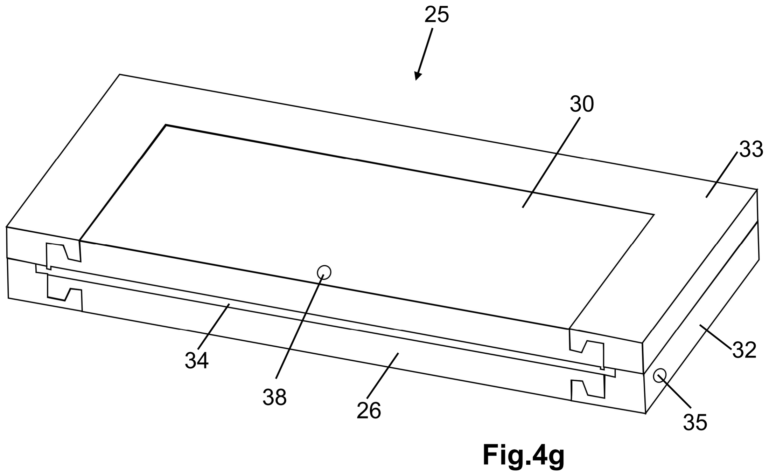

Fig. 4g zeigt, dass die Vorrichtung 20 ein fünftes Formenteil 33 aufweist, das benachbart zum dritten Formenteil 30 und gegenüber dem vierten Formenteil 32 angeordnet wird. Das fünfte Formenteil 33 bildet dabei einen weiteren Abschnitt der Innenfläche der Bauteilform 25.

Das fünfte Formenteil 33 ist an einem Rand des dritten Formenteils 30 anordenbar. Es umschließt das dritte Formenteil 30. Hierzu ist es rahmenförmig ausgebildet.

Wie in Fig. 4g dargestellt, ist nun eine vollständige Bauteilform 25 gegeben, die eine Kavität 34 allseitig umschließt. Aus Gründen der Klarheit ist in Fig. 4g das in der Kavität 34 aufgenommene flächenförmige Gebilde nicht dargestellt. Durch eine Zufuhröffnung 35 kann in die Bauteilform 25 die Matrix in flüssiger Form eingebracht werden, bevor die Matrix mit dem darin eingebetteten flächenförmigen Gebilde 4 erhärtet. Durch die weitere Öffnung 38 in der Bauteilform 25 kann Luft aus der Kavität entweichen, die von der Matrix verdrängt wird. Anschließend kann die Bauteilform 25 geöffnet werden, um das fertige faserverstärkte Bauteil aus der Bauteilform 25 zu entnehmen.

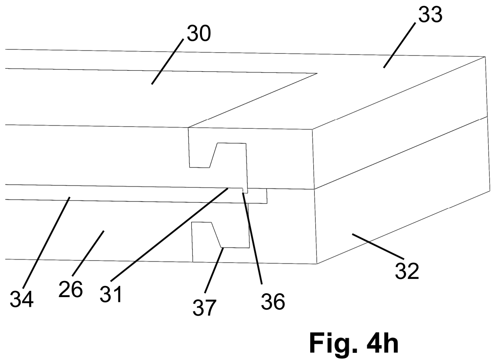

Fig. 4h zeigt vergrößert ein Detail der Bauteilform 25. Hier ist zu erkennen, dass das dritte Formenteil 30 eine von der Gegenfläche 31 vorspringenden Nase 36 aufweist. Die Nase 36 ermöglicht es, das auf der Ablagefläche 24 abgelegte flächenförmige Gebilde 4 auch nach dem Entfernen des zweiten Formenteils 26 mit den Führungselementen 28 besonders effektiv zu fixieren.

Zusammenfassend kann das in den Fig. 4a bis 4h illustrierte Verfahren zur Herstellung des faserverstärkten Bauteils 1 mit folgenden Schritten beschrieben werden:
- Bereitstellen eines Faserbündels 5;
- Bereitstellen einer Bauteilform 25 umfassend eine Ablagefläche 24 sowie Führungselemente 28 für das Faserbündel 5;
- Ablegen des Faserbündels 5 auf der Ablagefläche 24 zu einem flächenförmigen Gebilde 4 mit mehreren regelmäßigen Schleifen 6, 6', 6", wobei das Faserbündel 5 um die Führungselementen 28 herum gelegt ist, um an diesen jeweils erste oder zweite Richtungswechselpunkte 7, 8 zu bilden;
- Entfernen der Führungselemente 28, wobei das flächenförmige Gebilde 4 auf der Ablagefläche 24 gehalten wird;
- Schließen der Bauteilform 25, wobei das flächenförmige Gebilde 4 in der Bauteilform 25 aufgenommen ist;
- Einbringung der Matrix 3 in flüssiger Form und anschließende Erhärtung der Matrix 3.

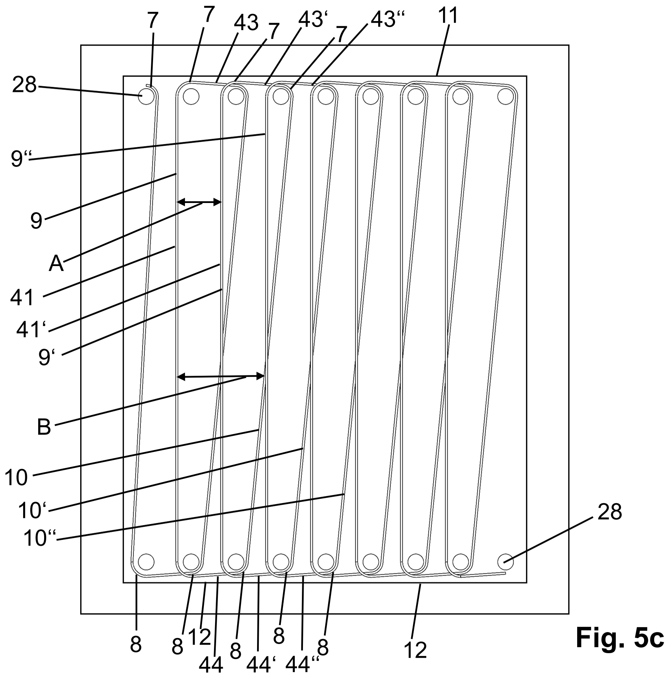

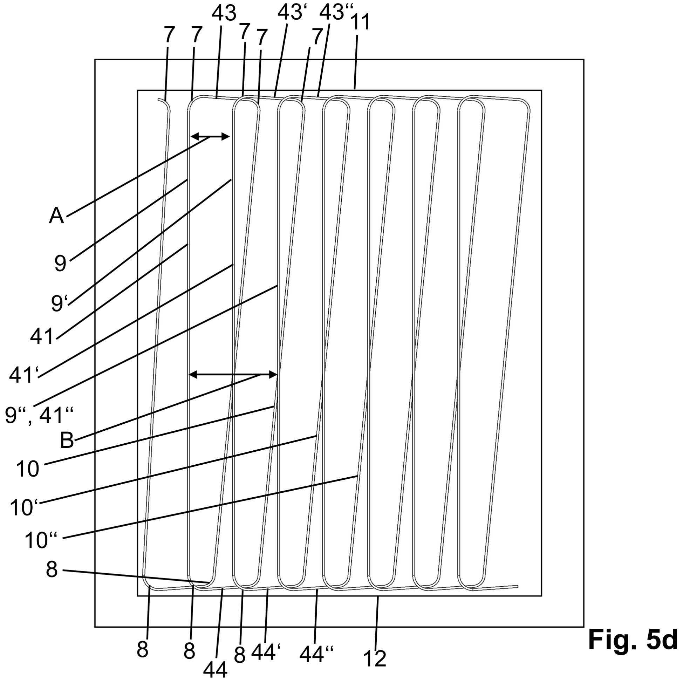

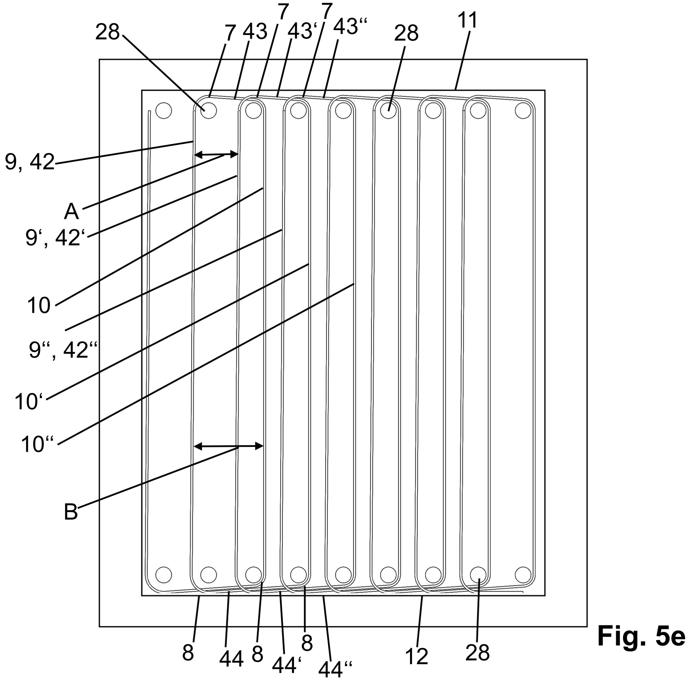

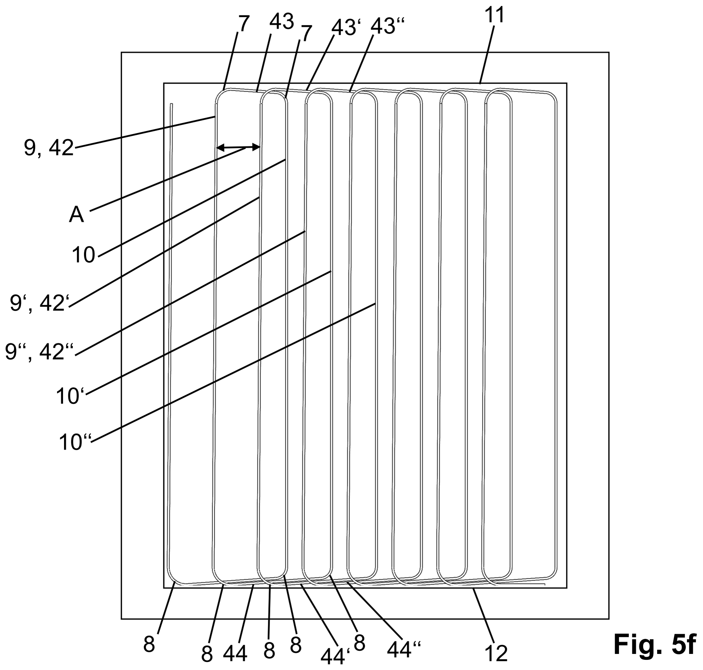

Die Fig. 5a bis 5f zeigen Beispiele für unterschiedliche regelmäßige Schleifen 40, 41, 42. Dargestellt ist zur besseren Veranschaulichung dabei in den Fig. 5a, 5c und 5e die Anordnung der Schleifen 40, 41 und 42 mit den Führungselementen 28, die beim Ablegen des Faserbündels 5 zu dem flächenförmigen Gebilde 4 verwendet werden. Die Fig. 5b, 5d und 5f zeigen die Anordnung der Schleifen 40, 41 und 42 so wie sie in dem fertigen Bauteil vorliegen, also nach Entfernen der Führungselemente 28.

Bei der in den Fig. 5a und 5b dargestellten Ausführungsform erstrecken sich die Schleifen 40 von der ersten Bauteilgrenze 11 zu der zweiten Bauteilgrenze 12. Beispielhaft sind drei nebeneinander angeordnete der Schleifen mit den Bezugszeichen 40, 40' und 40" gekennzeichnet. Jede Schleife 40, 40', 40" umfasst einen ersten Richtungswechselpunkt 7 und einen zweiten Richtungswechselpunkt 8. Fig. 5a und 5b zeigen auch, dass das Faserbündel 5 gekrümmte Abschnitte aufweist, die an den ersten und zweiten Richtungswechselpunkten 7, 8 der Schleifen 40, 40', 40" angeordnet sind. Fig. 5a und 5b zeigen weiterhin, dass die Schleifen 40, 40', 40" jeweils einen ersten und zweiten Verbindungsabschnitt 9, 10 aufweisen, die sich zwischen den ersten und zweiten Richtungswechselpunkten 7,8 erstrecken.

In Fig. 5a/5b sind mehrere Schleifen 40, 40', 40" nebeneinander angeordnet, die jeweils einen Abschnitt des durchgehenden Faserbündels 5 umfassen, der sich von der ersten Bauteilgrenze 11 zu der zweiten Bauteilgrenze 12 und wieder zurück zu der ersten Bauteilgrenze 11 erstreckt. Bei dem in Fig. 5a/ 5b dargestellten Ausführungsbeispiel sind die Schleifen 40, 40', 40" nicht überlappend angeordnet. Die Schleifen 40 sind jeweils nebeneinander um einen Abstand A zueinander versetzt angeordnet. Die Schleifen 40, 40', 40" weisen dabei dieselbe Grundform auf.

Die Schleifen 40, 40' und 40" weisen bei dem in Fig. 5a/ 5b dargestellten Ausführungsbeispiel an den ersten und zweiten Richtungswechselpunkten 7, 8 Richtungswechsel in dem Bereich zwischen 135 ° und 225 °, nämlich jeweils 180 °, auf.

Bei den Schleifen 40, 40' und 40" sind die ersten und zweiten Verbindungsabschnitte 9, 10 jeweils parallel zueinander angeordnet.

Die ersten Richtungswechselpunkte liegen auf einer ersten Linie und die zweiten Richtungswechselpunkte 8 liegen auf einer zweiten Linie. Im dargestellten Ausführungsbeispiel ist die erste und die zweite Linie jeweils eine Grade. Die erste Linie verläuft entlang der ersten Bauteilgrenze 11 und die zweite Linie entlang der zweiten Bauteilgrenze 12.

Wie dargestellt, ist das Faserbündel 5 in dem flächenförmigen Gebilde 4 ohne eine feste Verbindung zwischen den einzelnen Abschnitten des Faserbündels 5 angeordnet. Insbesondere weist das flächenförmige Gebilde keine Verknüpfungen auf.

In den Fig. 5a und 5b ist die Ausgestaltung der Schleifen 40, 40', 40" schematisch dargestellt. In tatsächlichen Ausführungsbeispielen können die Schleifen abweichend ausgebildet sein. Insbesondere besteht auch die Möglichkeit, dass das flächenförmige Gebilde mehrere übereinander angeordnete Lagen aufweist, die in die selbe oder in unterschiedliche Richtungen angeordnet sein können, wobei jede der Lagen wiederum mehrere der Schleifen 40, 40' und 40" enthalten kann.

Bei der in Fig. 5a und 5b dargestellten Ausführungsform ist das Faserbündel 5 mit einem Bogenwechsel an den ersten und zweiten Richtungswechselpunkten 7, 8 angeordnet. Damit ändert sich an den ersten und zweiten Richtungswechselpunkten 7, 8 das Krümmungsverhalten des Faserbündels 5.

Die Fig. 5c und 5d zeigen eine weitere Ausgestaltung des flächenförmigen Gebildes 4. Dieses weist mehrere Schleifen auf, von denen drei Schleifen beispielhaft mit 41, 41', 41" bezeichnet sind. Die Schleifen 41, 41', 41" erstrecken sich von der ersten Bauteilgrenze 11 zu der zweiten Bauteilgrenze 12. Die Schleifen 41, 41', 41" sind wiederum um einen Abstand A versetzt zueinander angeordnet. Sie weisen erste und zweite Verbindungsabschnitte 9, 10 auf, die sich von der ersten Bauteilgrenze 11 zu der zweiten Bauteilgrenze 12 erstrecken.

Fig. 5c und 5d zeigen weiterhin, dass die Schleifen 41, 41' und 41" überlappend angeordnet sind.

Anders als bei der Ausgestaltung aus Fig. 5a/ 5b weisen die Schleifen 41, 41', 41" jeweils zwei erste Richtungswechselpunkte 7 und zwei zweite Richtungswechselpunkte 8 auf. Die Schleife 41 umfasst dabei die ersten und zweiten Verbindungsabschnitte 9, 10, die Schleife 41' umfasst die ersten und zweiten Verbindungsabschnitte 9', 10' und die Schleife 41" umfasst die ersten und zweiten Verbindungsabschnitte 9" und 10".

Die Schleifen 41, 41' und 41" weisen jeweils einen dritten Verbindungsabschnitt 43 und einen vierten Verbindungsabschnitt 44 auf. Der dritte Verbindungsabschnitt 43 erstreckt sich entlang der ersten Bauteilgrenze 11 und der vierte Verbindungsabschnitt 44 entlang der zweiten Bauteilgrenze 12. Entsprechende dritte und vierte Verbindungsabschnitte 43', 43", 44', 44" sind auch bei den weiteren Schleifen 41' und 41" vorgesehen.

An den ersten und zweiten Richtungswechselpunkten 7, 8 liegt jeweils ein Richtungswechsel vor, der in dem Bereich zwischen 45 und 135 ° liegt.

Bei der in Fig. 5c dargestellten Ausführungsform ist das Faserbündel 5 in den Schleifen 41, 41', 41" ohne Bogenwechsel angeordnet.

Die Schleifen 41, 41' und 41" weisen in der Richtung, in der die Schleifen versetzt zueinander angeordnet sind, eine Schleifenbreite B auf. Wie dargestellt, kann der Abstand A zwischen zwei benachbarten Schleifen kleiner als die Schleifenbreite B sein.

Aufgrund der Gestaltung mit den dritten und vierten Verbindungsabschnitten 43, 44 und der Überlappung können besonders stabile Bauteile hergestellt werden. Insbesondere können die Bauteile entsprechend Fig. 5c/5d auch Kräfte gut aufnehmen, die eine Kraftkomponente entlang der ersten und/oder zweiten Bauteilgrenze 11, 12 aufweisen.

Die in Fig. 5c und 5d dargestellte Ausführungsform kann dadurch hergestellt werden, dass das Faserbündel 5 nicht direkt an den ersten und zweiten Richtungswechselpunkten um das jeweilige Führungselement 28 herum geführt wird, sondern um zwei Führungselemente 28 herum geführt wird, bevor das Faserbündel zu der anderen Bauteilgrenze 11 bzw. 12 zurück geführt wird.

Fig. 5c/ 5d zeigen, dass die ersten und zweiten Verbindungsabschnitte 9, 10 der Schleifen 41, 41', 41" jeweils in einem Winkel zueinander angeordnet sind. Dabei ist der erste Verbindungsabschnitt 9 der Schleife 40' über dem zweiten Verbindungsabschnitt 10 der Schleife 41 angeordnet.

Die Fig. 5e und 5f zeigen eine weitere Ausführungsform, die ähnlich wie die Ausführungsform der Fig. 5c/ 5d ausgebildet ist. Die Schleifen 42, 42' und 42" sind wieder jeweils nebeneinander in einer Lage überlappend angeordnet. Bei der dargestellten Ausführungsform sind die ersten und zweiten Verbindungsabschnitte 9, 10 parallel angeordnet. Die Schleifen 42, 42' und 42" weisen jeweils zwei erste Richtungswechselpunkte 7 und zwei zweite Richtungswechselpunkte 8 auf. Dementsprechend enthalten die Schleifen 42, 42' und 42" wiederum dritte und vierte Verbindungsabschnitte 43, 43', 43" und 44, 44', 44".

Die Schleifen 42, 42', 42" können dadurch erhalten werden, indem das Faserbündel 5 auf der einen Seite um zwei benachbarte Führungselement 28 gelegt wird, während es auf der anderen Seite um drei benachbarte Führungselemente 28 gelegt ist.

Im Übrigen ist die Ausführungsform der Fig. 5e und 5f ähnlich wie die Ausführungsform aus den Fig. 5c und 5d ausgebildet. Auf die diesbezügliche Beschreibung wird Bezug genommen.

Bei der Ausführungsform der Fig. 5e/ 5f ist zu erkennen, dass die ersten und zweiten Richtungswechselpunkte 7, 8 der Schleifen 42, 42', 42" jeweils an den Ecken eines gedachten Vierecks liegen.

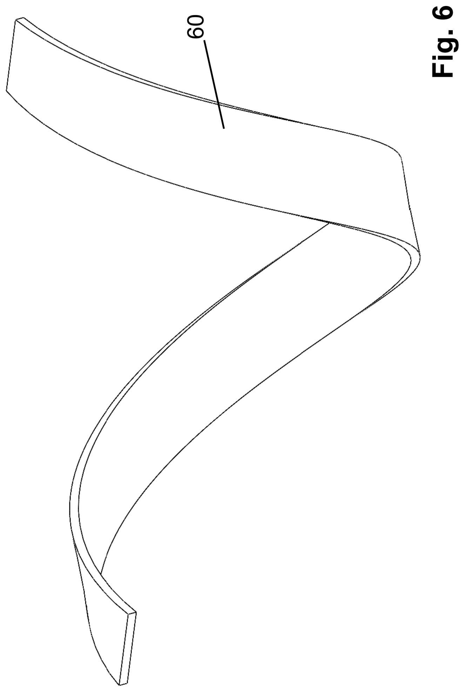

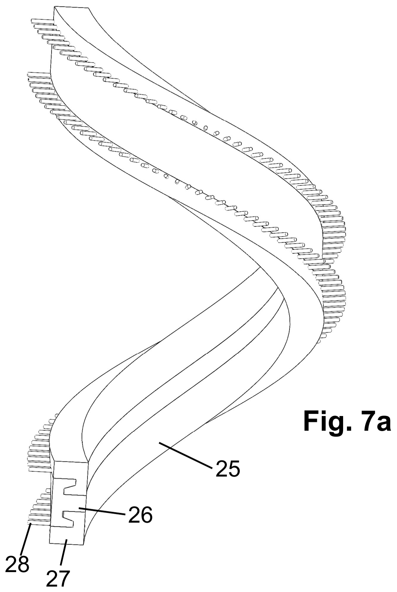

Die Fig. 6 und 7a bis 7c illustrieren die Erfindung an einem dreidimensional ausgebildeten Ausführungsbeispiel. Fig. 6 zeigt dabei ein faserverstärktes Bauteil 60, das eine Wölbung aufweist. Das dargestellte Ausführungsbeispiel ist spiralförmig ausgebildet.

Fig. 7a zeigt das erste und das zweite Formenteil 26, 27 einer Vorrichtung zur Herstellung des faserverstärkten Bauteils aus Fig. 6. Das erste Formenteil 26 bildet wiederum eine Ablagefläche 24 für das flächenförmige Gebilde 4. An dem zweiten Formenteil 27 sind die Führungselemente 28 angeordnet. Mit einem 3-D-Verlegekopf kann das Faserbündel 5 um die Führungselemente 28 gelegt werden, um regelmäßige Schleifen zu bilden. Die Schleifen können dabei beispielsweise, wie in den Fig. 5a bis 5f dargestellt, ausgebildet sein.

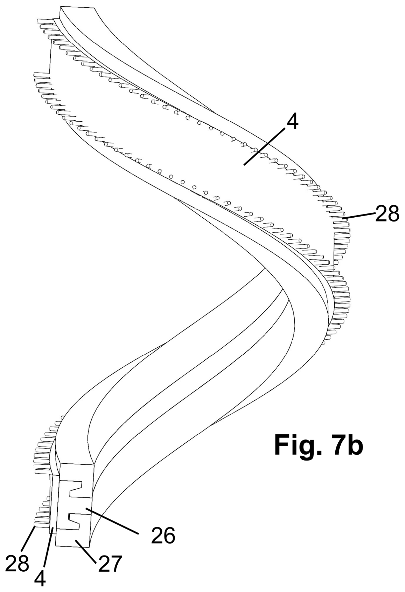

Fig. 7b zeigt schematisch das erste und das zweite Formenteil 26, 27 nach dem Ablegen des Faserbündels 5 zu einem flächenförmigen Gebilde. Aus Gründen der Klarheit ist die Lage des flächenförmigen Gebildes 4 lediglich schematisch angedeutet. Das flächenförmige Gebilde ist entlang der Wölbung des Bauteils 60 angeordnet.

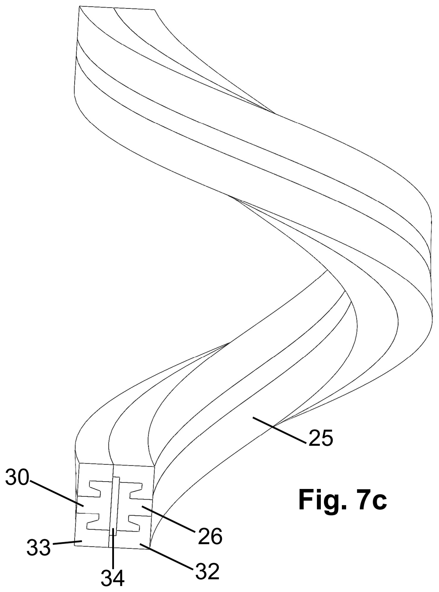

Fig. 7c zeigt die Bauteilform 25 nach Entfernen des zweiten Formenteils 27 und Hinzufügen des dritten, vierten und fünften Formenteils 30, 32, 33. Der Aufbau entspricht im Wesentlichen demjenigen, der im Zusammenhang mit den Fig. 4a bis 4h beschrieben wurde. Die Form 25 bildet wiederum eine Kavität 34, in der das flächenförmige Gebilde 4 aufgenommen ist und beim Befüllen der Kavität 34 mit der Matrix in diese eingebettet wird. Nach dem Entfernen der Bauteilform 25 kann das in Fig. 6 dargestellte Bauteil 1' erhalten werden.

Die Fig. 6 bis 7c verdeutlichen, dass auch faserverstärkte Bauteile 60 mit komplexer Kontur hergestellt werden können.

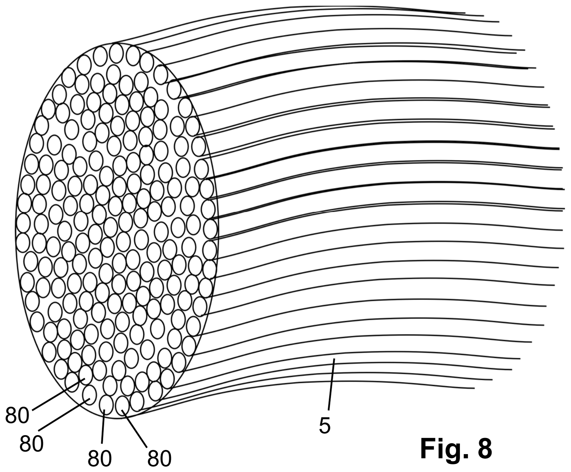

Fig. 8 zeigt schematisch einen Endabschnitt eines Faserbündels 5. Dieses umfasst eine Vielzahl von nebeneinander angeordneten Filamenten 80. Die Filamente 80 können im Faserbündel 5 im Wesentlichen parallel zueinander angeordnet sein. Im dargestellten Ausführungsbeispiel weist das Faserbündel 5 einen kreisförmigen Querschnitt auf. Der Querschnitt kann anders als dargestellt beispielsweise auch oval ausgebildet sein.

Das Faserbündel 5 ist in Fig. 8 nur schematisch dargestellt. In tatsächlichen Ausführungen kann das Faserbündel 5 in bevorzugter Weise zwischen 3.000 und 60.000 Filamente aufweisen. Dabei weist das Faserbündel 5 bevorzugt eine Stärke zwischen 60 dtex und 4.800 dtex auf.

Das Faserbündel kann Filamente aus unterschiedlichen Fasern, wie Carbonfasern, Glasfasern, Polymerfasern und/oder Naturfasern, umfassen. Ein Durchmesser der Filamente 80 kann insbesondere in dem Bereich zwischen 5 µm und 25 µm liegen.

Das Faserbündel 5 kann eine Beschichtung umfassend ein Polymer aufweisen. Das erleichtert die Verarbeitung des Faserbündels 5 und verbessert die Einbindung des Faserbündels 5 in die Matrix. Die Beschichtung, die auch als "Schlichte" bezeichnet wird, wird vorab auf das Faserbündel aufgebracht.

Vorkonfektionierte Faserbündel sind auf dem Markt erhältlich. Beispielsweise sind geeignete Faserbündel aus Carbonfasern von Toray unter der Produktbezeichnung T300, T400, T700, T800 und T1000 erhältlich. Von Mitsubishi sind Faserbündel aus Carbonfasern unter den Produktbezeichnungen TRH50, H40, MS40 und MS70 erhältlich. Von Teijin sind Faserbündel unter den Produktbezeichnungen Tenax UTS50, STS40, IMS40, IMS65 erhältlich.

Geeignete Faserbündel aus Glasfasern sind von Vetrotex unter den Produktbezeichnungen EC9; EC13 und EC14 sowie von Hacotech unter den Produktbezeichnungen GR gm-2400; GR4800 erhältlich.

Faserbündel aus Polymerfasern sind beispielsweise von Dupont unter der Produktbezeichnung Kevlar 29 und Kevlar 49 erhältlich.

Die für das faserverstärkte Bauteil 1, 60 verwendete Matrix 3 kann ein polymeres Kunststoffmaterial umfassen. Das polymere Kunststoffmaterial kann insbesondere ein duroplastischer Werkstoff, ein thermoplastischer Werkstoff oder ein Vitrimer sein.

Duroplastische Werkstoffe, umfassend Epoxidverbindungen, sind beispielsweise von Aditya Birla unter der Produktbezeichnung CTP-Recyclamine erhältlich. Polymeres Kunststoffmaterial, umfassend einen Vitrimer, ist beispielsweise von Malinda unter der Bezeichnung Vitrimax erhältlich. Eine Matrix, umfassend einen thermoplastischen Werkstoff, ist beispielsweise von Arkema unter der Produktbezeichnung Elium verfügbar.

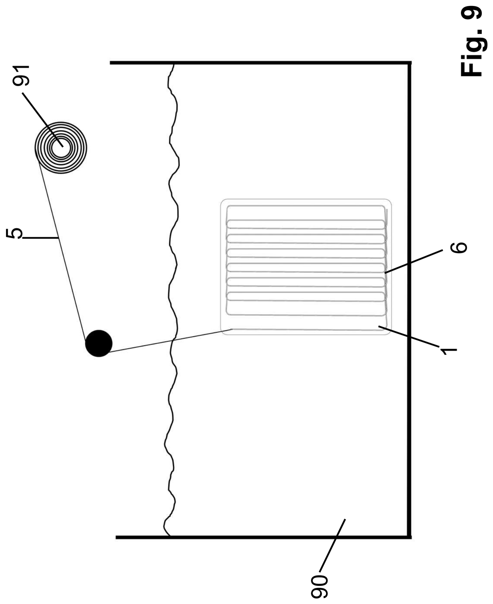

Fig 9 illustriert das Recycling an dem Beispiel des faserverstärkten Bauteils 1. Zunächst wird die Matrix 3 des faserverstärkten Bauteils entfernt. Dies kann dadurch geschehen, dass die Matrix durch Solvolyse aufgelöst wird. Hierzu wird das faserverstärkte Bauteil in ein Lösungsmittelbad 90 eingebracht. Auf diese Weise wird das Faserbündel 5 des flächenförmigen Gebildes 4 wieder freigelegt. Anschließend kann das Faserbündel des flächenförmigen Gebildes aufgenommen, abgezogen und auf eine Spule 91 aufgewickelt werden.

Aufgrund der Ausgestaltung der Schleifen 40 ohne Verknüpfungen und Knoten kann das Faserbündel 5 ohne Beschädigungen zurückgewonnen werden. Hierzu tragen die beschriebenen Anordnungen in regelmäßigen Schleifen 6 bei. Mit dem zurückgewonnenen Faserbündel 5 können dann neue Produkte vergleichbarer Art wiederhergestellt werden. Es ergibt sich also die Möglichkeit zur Wiederverwertung des Faserbündels 5 ohne oder mit geringem Qualitätsverlust.

## Patentansprüche

1. Faserverstärktes Bauteil (1, 60), umfassend einen Körper (2) mit einer Matrix (3), die einen polymeren Werkstoff umfasst, und einem flächenförmigen Gebilde (4), das durch ein Faserbündel (5) gebildet ist, wobei das flächenförmige Gebilde (4) in der Matrix (3) eingebettet ist, wobei das Faserbündel (5) in dem flächenförmigen Gebilde (4) mehrere regelmäßige Schleifen (6, 40, 41, 42) bildet, die durch Abschnitte des Faserbündels (5) gebildet sind, wobei das Faserbündel (5) in jeder Schleife (6, 40, 41,42) zumindest einen ersten und einen zweiten Richtungswechselpunkt (7, 8) aufweist, wobei das Faserbündel (5) gekrümmte Abschnitte aufweist, die an den erste und zweiten Richtungswechselpunkten (7, 8) der Schleifen (6, 40, 41, 42) angeordnet sind, wobei das Faserbündel (5) zwischen den ersten und zweiten Richtungswechselpunkten (7, 8) der Schleife (6, 40, 41, 42) jeweils einen ersten und einen zweiten Verbindungsabschnitt (9, 10) aufweist.

2. Faserverstärktes Bauteil nach Anspruch 1, **dadurch gekennzeichnet, dass** die regelmäßigen Schleifen (6, 40, 41, 42) des flächenförmigen Gebildes (4) versetzt zueinander angeordnet sind.

3. Faserverstärktes Bauteil nach Anspruch 1 oder 2, **dadurch gekennzeichnet, dass** die regelmäßigen Schleifen (6, 40, 41, 42) überlappend angeordnet sind.

4. Faserverstärktes Bauteil nach einem der Ansprüche 1 bis 3, **dadurch gekennzeichnet, dass** an den ersten und zweiten Richtungswechselpunkten (7, 8) ein Richtungswechsel des Faserbündels (5) um mehr als 45 ° vorliegt.

5. Faserverstärktes Bauteil nach einem der Ansprüche 1 bis 4, **dadurch gekennzeichnet, dass** die ersten Richtungswechselpunkte (7) der Schleifen (6, 40, 41, 42) entlang einer ersten Bauteilgrenze (11) und/oder die zweiten Richtungswechselpunkte (8) der Schleifen (6, 40, 41, 42) entlang einer zweiten Bauteilgrenze (12) angeordnet sind.

6. Faserverstärktes Bauteil nach einem der Ansprüche 1 bis 5, **dadurch gekennzeichnet, dass** das Faserbündel (5) eine Beschichtung aufweist.

7. Faserverstärktes Bauteil nach einem der Ansprüche 1 bis 6, **dadurch gekennzeichnet, dass** das Faserbündel (5) derart in dem flächenförmigen Gebilde (4) angeordnet ist, dass es nach Entfernung der Matrix (3) durch Zug an einem Ende des Faserbündels (5) ohne Bildung von Knoten abgezogen werden kann.

8. Faserverstärktes Bauteil nach einem der Ansprüche 1 bis 7, **dadurch gekennzeichnet, dass** das Faserbündel (5) in dem flächenförmigen Gebilde (4) in einer oder mehreren übereinander angeordneten Lagen (29) angeordnet ist.

9. Faserverstärktes Bauteil nach einem der Ansprüche 1 bis 8, **dadurch gekennzeichnet, dass** das Faserbündel (5) einen Faserbündeldurchmesser aufweist, der zwischen 0,2 mm und 10 mm liegt.

10. Faserverstärktes Bauteil nach einem der Ansprüche 1 bis 9, dass das Faserbündel (5) ein Bündel aus nebeneinander angeordneten Filamenten (80) aufweist.

11. Faserverstärktes Bauteil nach einem der Ansprüche 1 bis 10, **dadurch gekennzeichnet, dass** die Matrix (3) ein polymeres Kunststoffmaterial umfasst.

12. Faserverstärktes Bauteil nach einem der Ansprüche 1 bis 11, **dadurch gekennzeichnet, dass** das flächenförmige Gebilde (4) parallel zu einer Oberfläche des Bauteils (1, 60) angeordnet ist.

13. Verfahren zur Herstellung eines faserverstärkten Bauteils (1, 60) nach einem der Ansprüche 1 bis 12, mit folgenden Schritten:
- Bereitstellen eines Faserbündels (5);
- Bereitstellen einer Bauteilform (25) umfassend eine Ablagefläche (24) sowie Führungselemente (28) für das Faserbündel (5);
- Ablegen des Faserbündels (5) auf der Ablagefläche (24) zu einem flächenförmigen Gebilde (4) mit mehreren regelmäßigen Schleifen (6, 40, 41, 42), wobei das Faserbündel (5) um die Führungselementen (28) herum gelegt ist, um an diesen jeweils erste oder zweite Richtungswechselpunkte (7, 8) zu bilden;
- Entfernen der Führungselemente (28), wobei das flächenförmige Gebilde (4) auf der Ablagefläche (24) gehalten wird;
- Schließen der Bauteilform (25), wobei das flächenförmige Gebilde (4) in der Bauteilform (25) aufgenommen ist;
- Einbringung der Matrix (3) in flüssiger Form und anschließende Erhärtung der Matrix (3).

14. Vorrichtung zur Herstellung eines Bauteils (1, 60) nach einem der Ansprüche 1 bis 12, umfassend einen beweglichen Verlegekopf (21) für ein Faserbündel (5) und eine Bauteilform (25), umfassend ein erstes Formenteil (26), ein benachbart zum ersten Formenteil (26) angeordnetes zweites Formenteil (27), wobei das erste Formenteil (26) eine Ablagefläche (24) für das flächenförmige Gebilde (4) bildet, wobei an dem zweiten Formenteil (27) Führungselemente (28) für das Faserbündel (5) angeordnet sind, wobei der bewegliche Verlegekopf (21) dazu eingerichtet ist, das Faserbündel (5) um die Führungselemente (28) herum auf der Ablagefläche (24) geordnet abzulegen.

15. Verfahren zum Recyclen eines Bauteils (1, 60) nach einem der Ansprüche 1 bis 12, mit folgenden Schritten:
- Bereitstellen des faserverstärkten Bauteils (1, 60);
- Entfernen der Matrix (3) des faserverstärkten Bauteils (1, 60);
- Aufnehmen und Abziehen des Faserbündels (5) des flächenförmigen Gebildes (4).
